(19) Europäisches Patentamt
European Patent Office
Office européen des brevets

(11) EP 4 788 020 A1

(12) EUROPEAN PATENT APPLICATION
published in accordance with Art. 153(4) EPC

(43) Date of publication:
05.08.2026 Bulletin 2026/32

(51) International Patent Classification (IPC):
H04W 72/232 (2023.01)

(21) Application number: 23953351.6

(52) Cooperative Patent Classification (CPC):
H04W 72/232

(22) Date of filing: 25.09.2023

(86) International application number:
PCT/CN2023/121249

(87) International publication number:
WO 2025/065187 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: 1FINITY INC.
Kawasaki-shi, Kanagawa 211-8588 (JP)

(72) Inventors:
• ZHANG, Jian
Beijing 100022 (CN)
• WANG, Guotong
Beijing 100022 (CN)
• LU, Yiwen
Beijing 100022 (CN)
• ZHAO, di
Beijing 100022 (CN)

(74) Representative: Haseltine Lake Kempner LLP
Cheapside House
138 Cheapside
London EC2V 6BJ (GB)

(54) **DATA TRANSMISSION AND DATA RECEPTION APPARATUSES AND METHODS**

(57) Embodiments of this disclosure provide data transmission and data reception apparatuses and methods thereof. The method includes: a terminal equipment being configured to apply a first transmission configuration indication (TCI) state and/or a second transmission configuration indication (TCI) state; and transmitting a physical uplink shared channel (PUSCH) corresponding to a configured grant type 1 according to the first transmission configuration indication (TCI) state and/or the second transmission configuration indication (TCI) state; wherein in a case where terminal equipment being configured to apply the first transmission configuration indication (TCI) state or the second transmission configuration indication (TCI) state to transmit the physical uplink shared channel (PUSCH), the terminal equipment transmitting the physical uplink shared channel (PUSCH) according to a first transmission precoding matrix indicator (TPMI) and/or a first SRS resource indicator (SRI). Hence, ambiguities in understanding of transmission parameters actually applied to a configured grant Type 1 PUSCHs by the terminal equipment and the network device may be avoided, thereby avoiding failures in PUSCH transmission, and achieving reliable transmission of uplink data.

701
The terminal equipment being configured to apply a first transmission configuration indication (TCI) state and/or a second transmission configuration indication (TCI) state

702
The terminal equipment transmits a physical uplink shared channel (PUSCH) corresponding to a configured grant type 1 according to the first transmission configuration indication (TCI) state and/or the second transmission configuration indication (TCI) state; wherein in a case of being configured to apply the first transmission configuration indication (TCI) state or the second transmission configuration indication (TCI) state to transmit the PUSCH, the PUSCH is transmitted according to a first transmission precoding matrix indicator (TPMI) and/or a first SRS resource indicator (SRI)

**Fig. 7**

**Description**

Technical Field

This disclosure relates to the field of communication technologies.

Background

The 3GPP standardization organization has standardized a unified transmission configuration indication (TCI) in the standardization process of Release 17 (Rel-17), wherein the unified TCI includes a single TRP (single transmission and reception point, sTRP) unified TCI and a multiple transmission and reception point (mTRP) unified TCI, wherein the sTRP unified TCI has a TCI state in one transmission direction corresponding to one TRP, and the mTRP unified TCI has two TCI states in one transmission direction corresponding to two TRPs.

In previous standardization works, transmission of physical downlink shared channels (PDSCHs), physical downlink control channels (PDCCHs), physical uplink shared channels (PUSCHs) and physical uplink control channels (PUCCHs) based on mTRP is standardized, wherein the mTRP transmission includes mTRP transmission based on single DCI (downlink control information) (sDCI) and mTRP transmission based on multiple DCI (mDCI).

Simultaneous transmission multi-panel (STxMP) is under standardization in Rel-18 in 3GPP, which is designed based on an mTRP unified TCI framework.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

In Rel-18, standardization will be continued on STxMP based on mTRP of sDCI (single DCI). For STxMP, PUSCH transmission based on STxMP may include different specific transmission schemes, such as including a simultaneous multi-panel transmission (STxMP) spatial division multiplexing (SDM) scheme, and a simultaneous multi-panel transmission (STxMP) single-frequency network (SFN) scheme, etc. And in a case where a terminal equipment is configured with STxMP, the terminal equipment may further use the sTRP scheme or time-division multiplexing (TDM) scheme to transmit uplink data.

STxMP supports uplink data transmission based on a dynamic grant and a configured grant. For a traditional configured grant, such as a configured grant before introduction of Rel-18 STxMP, a terminal equipment may use the configured grant (CG) to transmit uplink data (e.g. a PUSCH or a UL-SCH). In a configuration of the configured grant, the terminal equipment is preconfigured with configured grant occasions, which are always reserved for use by possible uplink transmissions. When there is uplink data needing to be transmitted, the terminal equipment may autonomously select configured grant occasions to perform transmission. As there is no need to wait for uplink scheduling from a network device, the configured grant is able to achieve faster uplink transmission. For example, the configured grant includes configured grant type 1 and configured grant type 2. After radio resource control (RRC) signaling configures configured grant type 1, the terminal equipment may use the configured grant occasions to perform uplink transmission. After the RRC signaling configures configured grant type 2, the terminal equipment may use the configured grant occasions to perform uplink transmission after downlink control information (DCI) activation.

In Rel-18, the terminal equipment may perform STxMP transmission based on a configured grant. For example, the terminal equipment is configured with two transmission precoding matrix indicators (TPMIs) and/or SRS resource indicators (SRIs), and transmits configured grant Type 1 PUSCHs to two TRPs by using two TPMIs and/or SRIs respectively.

It was found by the inventor that for a configured grant Type 1 PUSCH under an mTRP unified TCI, it may be configured with two TPMIs and/or two SRIs, may be configured to apply a first TCI state and/or a second TCI state, and may be configured to use the SDM scheme or the SFN scheme, etc., thereby generating multiple possible configuration combinations.

For some specific configuration combinations, there still exist undefined device behaviors in transmission of a configured grant Type 1 PUSCH. For example, when the terminal equipment is configured to apply the first TCI state or the second TCI state, which one of the two TPMIs and/or SRIs should be used by the terminal equipment is a technical problem that needs to be solved. For another example, when the terminal equipment is configured to use the SDM scheme, how the terminal equipment determines to actually apply phase tracking reference signal (PT-RS) ports and how to determine which demodulation reference signal (DMRS) port an actually applied phase tracking reference signal (PT-RS) port is associated with are both technical problems needing to be solved.

If the above technical problems are not solved, the terminal equipment and the network device will have inconsistent understanding of configuration parameters actually used for a configured grant Type 1 PUSCH transmission, thereby resulting in failures in uplink data transmission.

Addressed to at least one of the above problems, embodiments of this disclosure provide data transmission and data reception apparatuses and methods thereof. In a case where the terminal equipment is configured to apply a first TCI state or a second TCI state to transmit a PUSCH, the terminal equipment transmits the PUSCH according to a first TPMI and/or a first SRI. Hence, ambiguities in understanding transmission parameters actually applied to a configured grant type 1 PUSCH by the terminal equipment and the network device may be avoided, thereby avoiding failures in PUSCH transmission, and achieving reliable transmission of uplink data.

According to one aspect of the embodiments of this disclosure, there is provided a data transmission method, applicable to a terminal equipment, the method including:

being configured to apply a first transmission configuration indication (TCI) state and/or a second transmission configuration indication (TCI) state; and
transmitting a PUSCH corresponding to a configured grant type 1 according to the first transmission configuration indication (TCI) state and/or the second transmission configuration indication (TCI) state;
wherein in a case where the terminal equipment being configured to apply the first transmission configuration indication (TCI) state or the second transmission configuration indication (TCI) state to transmit the physical uplink shared channel (PUSCH), the PUSCH is transmitted according to a first transmission precoding matrix indicator (TPMI) and/or a first SRS resource indicator (SRI).

According to another aspect of the embodiments of this disclosure, there is provided a data reception method, applicable to a network device, the method including:

configuring a terminal equipment to apply a first transmission configuration indication (TCI) state and/or a second transmission configuration indication (TCI) state; and
receiving a physical uplink shared channel (PUSCH) corresponding to a configured grant type 1 transmitted by the terminal equipment; wherein in a case where the terminal equipment is configured to apply the first transmission configuration indication (TCI) state or the second transmission configuration indication (TCI) state to transmit the physical uplink shared channel (PUSCH), the terminal equipment transmits the physical uplink shared channel (PUSCH) according to a first transmission precoding matrix indicator (TPMI) and/or a first SRS resource indicator (SRI).

According to a further aspect of the embodiments of this disclosure, there is provided a data transmission apparatus, configured in a terminal equipment, wherein the data transmission apparatus includes:

a first configuring unit configured to apply a first transmission configuration indication (TCI) state and/or a second transmission configuration indication (TCI) state; and
a transmitting unit configured to transmit a physical uplink shared channel (PUSCH) corresponding to a configured grant type 1 according to the first transmission configuration indication (TCI) state and/or the second transmission configuration indication (TCI) state;
wherein in a case where the first configuring unit is configured to apply the first transmission configuration indication (TCI) state or the second transmission configuration indication (TCI) state to transmit the physical uplink shared channel (PUSCH), the transmitting unit transmits the physical uplink shared channel (PUSCH) according to a first transmission precoding matrix indicator (TPMI) and/or a first SRS resource indicator (SRI).

According to still another aspect of the embodiments of this disclosure, there is provided a data reception apparatus, configured in a network device, wherein the data reception apparatus includes:

a second configuring unit configured to configure a terminal equipment to apply a first transmission configuration indication (TCI) state and/or a second transmission configuration indication (TCI) state; and
a receiving unit configured to receive a physical uplink shared channel (PUSCH) corresponding to a configured grant type 1 transmitted by the terminal equipment; wherein in a case where the terminal equipment is configured to apply the first transmission configuration indication (TCI) state or the second transmission configuration indication (TCI) state to transmit the physical uplink shared channel (PUSCH), the terminal equipment transmits the physical uplink shared channel (PUSCH) according to a first transmission precoding matrix indicator (TPMI) and/or a first SRS resource indicator (SRI).

An advantage of the embodiments of this disclosure exists in that in a case where the terminal equipment is configured to apply a first TCI state or a second TCI state to transmit a PUSCH, the terminal equipment transmits the PUSCH according to a first TPMI and/or a first SRI. Hence, ambiguities in understanding transmission parameters actually applied to a configured grant type 1 PUSCH by the terminal equipment and the network device may be avoided, thereby avoiding failures in PUSCH transmission, and achieving reliable transmission of uplink data.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.

FIG. 1 is a schematic diagram of a communication system of the embodiments of this disclosure;
FIG. 2 is another schematic diagram of the communication system of the embodiments of this disclosure;
FIG. 3 is a schematic diagram of transmitting a PUSCH in an STxMP SDM scheme of the embodiments of this disclosure;
FIG. 4 is another schematic diagram of transmitting the PUSCH in the STxMP SFN scheme of the embodiments of this disclosure;
FIG. 5 is a schematic diagram of transmitting a PUSCH in an sTRP scheme of the embodiments of this disclosure;
FIG. 6 is a schematic diagram of transmitting a PUSCH in a TDM scheme of the embodiments of this disclosure;
FIG. 7 is a schematic diagram of a data transmission method of the embodiments of this disclosure;
FIG. 8 is a schematic diagram of a data reception method of the embodiments of this disclosure;
FIG. 9 is a schematic diagram of a data transmission apparatus of the embodiments of this disclosure;
FIG. 10 is a schematic diagram of a data reception apparatus of the embodiments of this disclosure;
FIG. 11 is a schematic diagram of a structure of a network device of the embodiments of this disclosure; and
FIG. 12 is a schematic diagram of a terminal equipment of the embodiments of this disclosure.

Detailed Description

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as" at least partially based on", except specified otherwise.

In the embodiments of this disclosure, the term "communication network" or" wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, 5G and new radio (NR), etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, an industrial wireless device, a surveillance camera, a device to device (D2D) terminal, and a machine to machine (M2M) terminal, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" may refer to a network device, and may also refer to a terminal equipment.

Scenarios in the embodiments of this disclosure shall be described below by way of examples; however, this disclosure is not limited thereto.

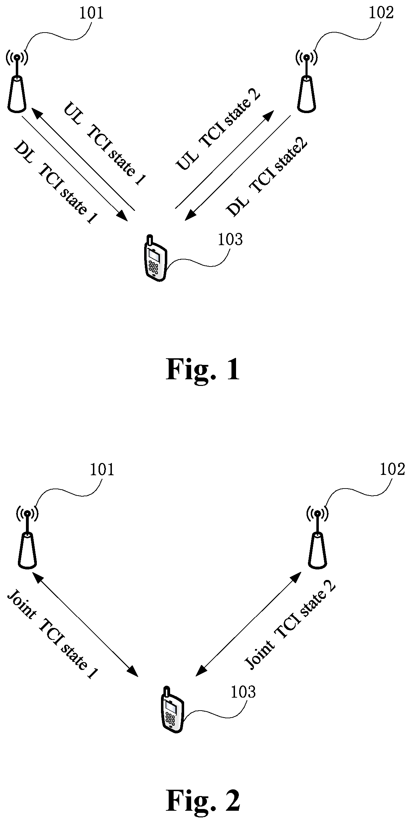

FIG. 1 is a schematic diagram of a communication system of the embodiments of this disclosure, and FIG. 2 is another schematic diagram of the communication system of the embodiments of this disclosure, in which a case where a terminal equipment and network devices are taken as examples is schematically shown. As shown in FIG. 1 and FIG. 2, the communication system 100 may include a first TRP 101, a second TRP 102 and a terminal equipment 103, wherein the first TRP 101 and the second TRP 102 may be network devices. For the sake of simplicity, an example having only two network devices and one terminal equipment is schematically given in FIG. 1 and FIG. 2. However, the embodiments of this disclosure are not limited thereto.

In the embodiments of this disclosure, existing services or services that may be implemented in the future may be performed between the first TRP 101, the second TRP 102 and the terminal equipment 103. For example, such services may include but not limited to an enhanced mobile broadband (eMBB), massive machine type communication (mMTC), and ultra-reliable and low-latency communication (URLLC), etc.

Transmission of PDSCHs based on mTRP is standardized in Rel-16, and transmission of PDCCHs, PUSCHs and PUCCHs based on mTRP is standardized in Rel-17. The mTRP transmission includes mTRP transmission based on sDCI (single DCI) and mTRP transmission based on mDCI (multiple DCI). For the mTRP transmission based on sDCI, one DCI schedules uplink and downlink transmissions of two TRPs, which is more applicable to a case where backhaul between TRPs is relatively ideal; and for the mTRP transmission based on mDCI, two TRPs use two DCIs to schedule uplink and downlink transmissions of their respective TRPs respectively, which is more applicable to a case where backhaul between TRPs is not ideal.

Standardization of STxMP will be continued in Rel-18. STxMP is based on an mTRP unified TCI framework.

In an mTRP unified TCI, for a certain transmission direction (uplink or downlink), the terminal equipment maintains two TCI states. The two TCI states are referred to as indicated TCI states, and are indicated by the network device via an MAC control element (MAC CE) and/or DCI.

FIG. 1 shows an example of uplink and downlink in the mTRP scenario of the embodiments of this disclosure, and FIG. 2 shows another example of the uplink and downlink in the mTRP scenario of embodiments of this disclosure.

In the unified TCI scheme in the mTRP scenario in Rel-18, for the terminal equipment 103 (UE 103), each TRP has a downlink and an uplink, and there are total four links between the UE and the two TRPs. For example, there exist a downlink (referred to as a first downlink below) and an uplink (referred to as a first uplink below) between the UE 103 and the first TRP 101 respectively, and there exist a downlink (referred to as a second downlink below) and an uplink (referred to as a second uplink below) between the UE 103 and the second TRP 102 respectively, so as to provide a QCL reference for transmission of their corresponding links.

In mTRP transmission, when a value of a higher layer parameter unifiedTCI-StateType is 'separate', as shown in FIG. 1, TCI states to which the four links correspond are {a first downlink TCI state (DL TCI state 1), a second downlink TCI state (DL TCI state 2), a first uplink TCI state (UL TCI state 1), a second uplink TCI state (UL TCI state 2)}, which may provide QCL references for the first downlink, the second downlink, the first uplink and the second uplink, respectively.

In mTRP transmission, when a value of the higher layer parameter unifiedTCI-StateType is 'joint', as shown in FIG. 2, TCI state to which the four links correspond are {a joint TCI state 1, a joint TCI state 2}, wherein the first joint TCI state may provide QCL references for the first downlink and the first uplink, and the second joint TCI state may provide QCL references for the second downlink and second uplink.

Therefore, for uplink transmission, the two indicated TCI states are "the first uplink TCI state and the second uplink TCI state", or "the first joint TCI state and the second joint TCI state". For downlink transmission, the two indicated TCI states are "the first downlink TCI state and the second downlink TCI state", or "the first joint TCI state and the second joint TCI state".

For certain channels or signals, such as PDCCHs, PUCCHs, and configured grants, etc., the terminal equipment may be configured to use "the first TCI state, or the second TCI state", or use "the first TCI state and the second TCI state".

In the sDCI mTRP scenario, STxMP PUSCH transmission supports the STxMP SDM scheme and the STxMP SFN scheme.

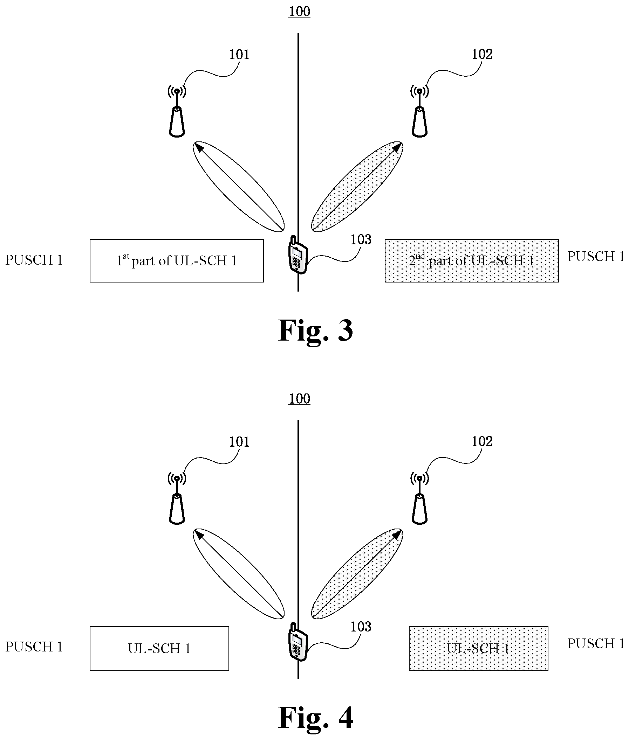

FIG. 3 is a schematic diagram of transmitting a PUSCH in the STxMP SDM scheme of the embodiments of this disclosure, and FIG. 4 is another schematic diagram of transmitting the PUSCH in the STxMP SFN scheme of the embodiments of this disclosure.

For example, in the mTRP scenario, the terminal equipment is configured with two panels to transmit PUSCHs to the first TRP 101 and the second TRP 102, respectively.

As shown in FIG. 3, in a case where the terminal equipment transmits uplink data in the STxMP SDM scheme, the uplink data (UL-SCH 1) is carried by PUSCH 1 and is divided into two parts, which are referred to as, for example, 1st part of UL-SCH 1 and 2nd part of UL-SCH 1. For example, the 1st part of UL-SCH 1 is transmitted on the first panel, and the 2nd part of UL-SCH 1 is transmitted on the second panel. The 1st part of UL-SCH 1 and the 2nd part of UL-SCH 1 are transmitted on the identical time-frequency resources, and may have different layers and may correspond to different DMRS ports.

As shown in FIG. 4, in a case where the terminal equipment transmits uplink data in the STxMP SFN scheme, uplink data 1 (UL-SCH 1) is carried by PUSCH 1, and uplink data 1 (UL-SCH 1) is divided into two duplicates, which are respectively transmitted via the first panel and the second panel. Contents transmitted on each panel are all UL-SCH 1. For example, UL-SCH 1 transmitted on the first panel and the second panel occupy identical time-frequency resources, have identical numbers of layers, and use identical DMRS ports.

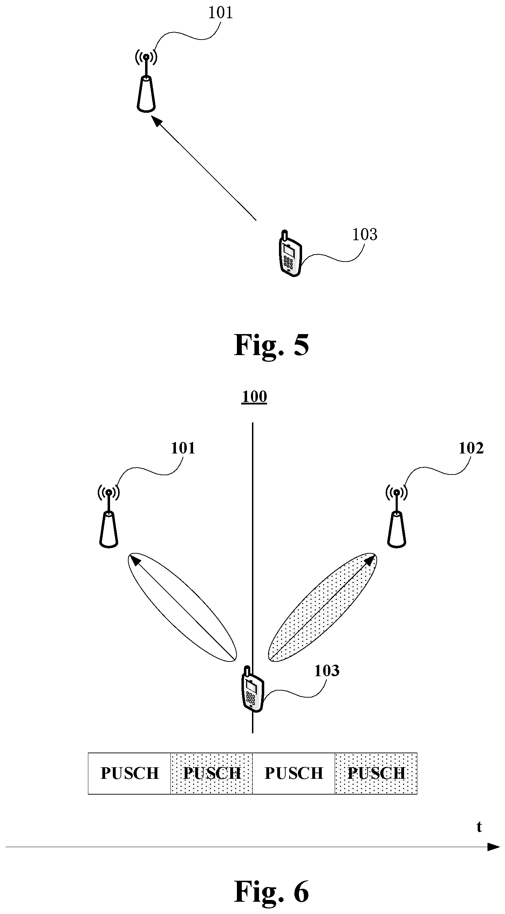

For PUSCH transmission, in addition to using the SDM scheme and the SFN scheme, the terminal equipment may also use the sTRP scheme to perform uplink transmission. FIG. 5 is a schematic diagram of transmitting a PUSCH in the sTRP scheme of the embodiments of this disclosure. For example, as shown in FIG. 5, the terminal equipment transmits a PUSCH to a TRP. As a most legacy PUSCH transmission scheme, standardization of the sTRP scheme began in Rel-15.

For PUSCH transmission, in addition to using the SDM scheme and the SFN scheme, the terminal equipment may also use the TDM schemes to perform uplink transmission. FIG. 6 is a schematic diagram of transmitting a PUSCH in the TDM scheme of the embodiments of this disclosure. For example, as shown in FIG. 6, the terminal equipment transmits a PUSCH to the first TRP at a first uplink transmission occasion, transmits a PUSCH to the second TRP at a second uplink transmission occasion, and so on. The TDM scheme was standardized in Rel-17.

STxMP supports uplink data transmission based on a dynamic grant and a configured grant. For a legacy configured grant, such as a configured grant before introduction of Rel-18 STxMP, the terminal equipment may use the configured grant (CG) to transmit uplink data (e.g. PUSCHs or UL-SCHs). In a configuration of the configured grant, the terminal equipment is preconfigured with configured grant occasions, which are always reserved for use in possible uplink transmission. When there are uplink data needing to be transmitted, the terminal equipment may autonomously select configured grant occasions for transmission. As there is no need to wait for uplink scheduling from the network device, the configured grant is able to achieve faster uplink transmission. For example, the configured grant includes configured grant type 1 and configured grant type 2. After radio resource control (RRC) signaling configures configured grant type 1, the terminal equipment may use the configured grant occasions to perform uplink transmission. After the RRC signaling configures configured grant type 2, the terminal equipment may use the configured grant occasions to perform uplink transmission after downlink control information (DCI) activation.

In Rel-18, the terminal equipment may perform STxMP transmission based on a configured grant. For example, the terminal equipment is configured with two transmission precoding matrix indicators (TPMIs) and/or SRS resource indicators (SRIs), and transmits configured grant Type 1 PUSCHs to two TRPs by using two TPMIs and/or SRIs respectively.

It was found by the inventor that for a configured grant Type 1 PUSCH under mTRP unified TCI, it may be configured with two TPMIs and/or two SRIs, may be configured to apply a first TCI state and/or a second TCI state, and may be configured to use the SDM scheme or the SFN scheme, etc., thereby generating multiple possible configuration combinations.

For some specific configuration combinations, there still exist undefined device behaviors in transmission of a configured grant Type 1 PUSCH. For example, when the terminal equipment is configured to apply the first TCI state or the second TCI state, which one of the two TPMIs and/or SRIs should be used by the terminal equipment is a technical problem that needs to be solved. For another example, when the terminal equipment is configured to use the SDM scheme, how the terminal equipment determines to actually apply phase tracking reference signal (PT-RS) ports and how to determine a demodulation reference signal (DMRS) port with which an actually applied phase tracking reference signal (PT-RS) port is associated are both technical problems needing to be solved. If the above technical problems are not solved, the terminal equipment and the network device will have inconsistent understanding of configuration parameters actually used for a configured grant Type 1 PUSCH transmission, thereby resulting in failures in uplink data transmission.

Addressed to at least one of the above problems, embodiments of this disclosure provide data transmission and data reception apparatuses and methods thereof.

Embodiments of a first aspect

The embodiments of this disclosure provide a data transmission method, applicable to a terminal equipment side.

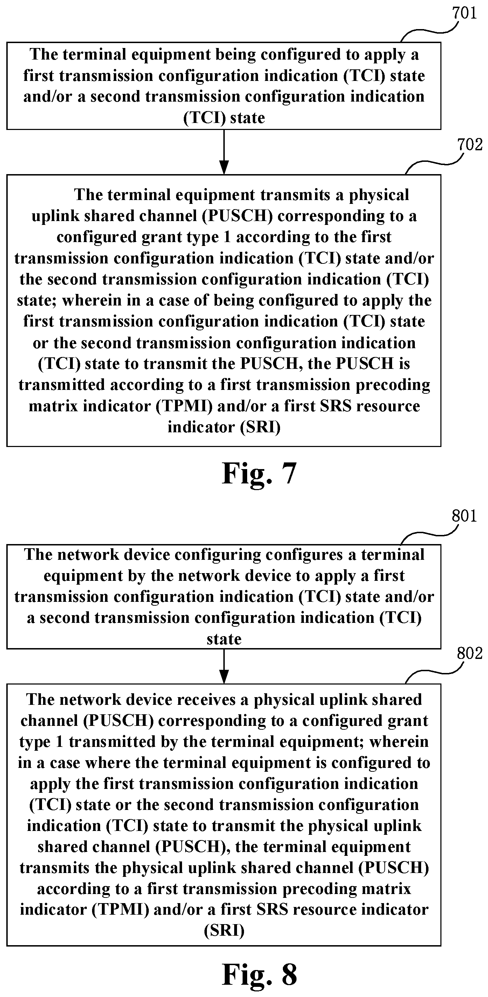

FIG. 7 is a schematic diagram of the data transmission method of the embodiments of this disclosure. As shown in FIG. 7, the method includes:

701: the terminal equipment being configured to apply a first transmission configuration indication (TCI) state and/or a second transmission configuration indication (TCI) state; and

702: the terminal equipment transmits a physical uplink shared channel (PUSCH) corresponding to a configured grant type 1 according to the first transmission configuration indication (TCI) state and/or the second transmission configuration indication (TCI) state; wherein in a case of being configured to apply the first transmission configuration indication (TCI) state or the second transmission configuration indication (TCI) state to transmit the PUSCH, the PUSCH is transmitted according to a first transmission precoding matrix indicator (TPMI) and/or a first SRS resource indicator (SRI).

Hence, ambiguities in understanding transmission parameters actually applied to a configured grant type 1 PUSCH by the terminal equipment and the network device may be avoided, thereby avoiding failures in PUSCH transmission, and achieving reliable transmission of uplink data.

It should be noted that FIG. 7 only schematically illustrates the embodiments of this disclosure, and the terminal equipment is taken as an example; however, this disclosure is not limited thereto. For example, an order of execution of the operations may be appropriately adjusted, and furthermore, some other operations may be added, or some operation therein may be reduced, and objects of the above operations may also be adjusted. And appropriate variants may be made by those skilled in the art according to the above contents, without being limited to what is contained in FIG. 7.

In some embodiments, 'the first TCI state' and 'the second TCI state' include one of 'an uplink TCI state', 'a joint TCI state' and 'a downlink TCI state'; "the uplink TCI state", "the joint TCI state" and "the downlink TCI state" may be indicated by "a joint DL/UL TCI state" or "a separate DL/UL TCI state"; "the DL TCI state" may be "a DL only TCI state "or "a joint TCI state"; "the UL TCI state" may be "a UL only TCI state" or "a joint TCI state". What described above is illustrative only, and the embodiments of this disclosure are not limited thereto.

In some embodiments, TCI state is equivalent to at least one of the following: panel; transmission and reception point (TRP); SRS resource set; and CORESET. For example, that "the terminal equipment is configured to apply the first transmission configuration indication (TCI) state or the second transmission configuration indication (TCI) state to transmit" is equivalent to that "the terminal equipment is configured to apply a first panel or a second panel to transmit", etc., which shall not be enumerated herein any further.

In some embodiments, configured grant type 1 may be replaced with type 1 configured grant; 'PUSCH corresponding to configured grant type 1' may be replaced with "PUSCH corresponding to configured grant type 1"; RRC parameters may be replaced with higher layer parameters; TPMI may be replaced with "TPMI and rank"; PT-RS refers to uplink PT-RS; DM-RS refers to uplink DM-RS, etc., which are not limited in this disclosure.

In some embodiments, 'PUSCH' corresponds to (equivalent to) 'uplink data' and corresponds to (equivalent to) 'UL-SCH', etc., which are not limited in this disclosure.

In some embodiments, for 'one TRP', it is associated with 'an SRS resource set', 'a UL TCI state', 'an SRS resource', a TPMI' and 'an uplink transmission'. For example, for the STxMP in Rel-18, a panel may be associated with a TRP, and may further be associated with an SRS resource set, a TCI state, an SRS resource, a TPMI, and an uplink transmission, etc.

For example, the terms "TRP" and "SRS resource set" may be interchangeable, and the terms "TRP" and "CSI-RS resource set" may be interchangeable. The terms 'correspond', 'associate' and 'include' may be interchangeable, and the terms "PUSCH", "PUSCH transmission" and "PUSCH transmitting" may be interchangeable.

In some embodiments, the terminal equipment further receives first configuration information. For example, the first configuration information is "ConfiguredGrantConfig", which may include a parameter "rrc-ConfiguredUplinkGrant", wherein " rrc-ConfiguredUplinkGrant" and "ConfiguredGrantConfig" are both RRC parameters.

In some embodiments, the terminal equipment may be configured by the first configuration information to apply the first TCI state and/or the second TCI state to transmit the configured grant type 1 PUSCH.

For example, the terminal equipment is configured by a field "applyIndicatedTCIState" in the RRC parameter "ConfiguredGrantConfig" to apply the first TCI state and/or the second TCI state to transmit the configured grant type 1 PUSCH. For example, the field "applyIndicatedTCIState" may be configured in "ConfiguredGrantConfig" or "rrc-ConfiguredUplinkGrant".

Table 1 is an example of the field "applyIndicatedTCIState" in the RRC parameter "ConfiguredGrantConfig" in this disclosure.

### Table 1

```
ConfiguredGrantConfig ::=        SEQUENCE {
    applyIndicatedTCIState       ENUMERATED{the first, the second,
both}
}
```

For example, "ConfiguradGrantConfig" in Table 1 corresponds to the first configuration information in this disclosure, and a value of the field "applyIndicatedTCIState" may be "the first", or "the second", or "both".

For example, in a case where the value in the field "applyIndicatedTCIState" is configured as "the first", it indicates that the terminal equipment applies the first TCI state, in a case where the value in the field "applyIndicatedTCIState" is configured as "the second", it indicates that the terminal equipment applies the second TCI state, and in a case where the value in the field "applyIndicatedTCIState" is configured as "both", it indicates that the terminal equipment applies the first TCI state and the second TCI state. Thus, via the first configuration information, the terminal equipment is configured to apply the first TCI state and/or the second TCI state.

In some embodiments, in the case where the terminal equipment is configured to apply the first TCI state or the second TCI state to transmit the configured grant type 1 PUSCH, when the terminal equipment is configured to apply the first TCI state to transmit the PUSCH, the terminal equipment transmits the PUSCH according to the first TPMI and/or the first SRI; and when the terminal equipment is configured to apply the second TCI state to transmit the PUSCH, the terminal equipment still transmits the PUSCH according to the first TPMI and/or the first SRI.

For example, 'the first TPMI and/or the first SRI' is/are one of the two TPMIs and/or the two SRIs configured for the terminal equipment, wherein the two TPMIs and/or the two SRIs configured for the terminal equipment correspond respectively to the first TCI state and the second TCI state. For example, " first one of TPMI and/or first one of SRI" in two TPMIs and/or two SRIs is/are predefined and taken as "the first TPMI and/or the first SRI", or " second one of TPMI and/or second one of SRI" in two TPMIs and/or two SRIs is/are predefined and taken as "the first TPMI and/or the first SRI", etc., which are not limited in this disclosure.

In some embodiments, the PUSCH includes a non-codebook based PUSCH, or a codebook based PUSCH.

For example, for codebook based PUSCH transmission, the terminal equipment transmits the PUSCH according to "the first TPMI and the first SRI"; and for non-codebook based PUSCH transmission, the terminal equipment transmits the PUSCH according to the first SRI. Reference may be made to the related art for relevant contents of "the non-codebook based PUSCH" and "the codebook based PUSCH", which are not limited in this disclosure.

In some embodiments, when the terminal equipment is configured to apply the first transmission configuration indication (TCI) state or the second transmission configuration indication (TCI) state to transmit the PUSCH, the first transmission precoding matrix indication information (TPMI) is configured by a first parameter (precodingAndNumberOfLayers), and/or the first SRS resource indication information (SRI) is configured by a second parameter (srs-ResourceIndicator).

For example, in a case where the value of the field "applyIndicatedTCIState" in the above first configuration information is configured as "the first" or "the second", the terminal equipment transmits the PUSCH according to the first TPMI and/or the first SRI, wherein the first TPMI is configured via an RRC parameter, i.e. the first parameter (precodingAndNumberOfLayers), and the first SRI is configured via an RRC parameter, i.e. the second parameter (srs-ResourceIndicator).

In some embodiments, in the case where the terminal equipment is configured to apply the first transmission configuration indication (TCI) state or the second transmission configuration indication (TCI) state to transmit the PUSCH, the terminal equipment is configured with the first parameter (precodingAndNumberOfLayers) and/or the second parameter (srs-ResourceIndicator); or, the terminal equipment is configured with the first parameter (precodingAndNumberOfLayers) and a third parameter (precodingAndNumberOfLayers2); and/or, the terminal equipment is configured with the second parameter (srs-ResourceIndicator) and a fourth parameter (srs-ResourceIndicator2).

For example, in the case where the value of the field "applyIndicatedTCIState" in the above first configuration information is configured as "the first" or "the second", the terminal equipment is configured with the first parameter (precodingAndNumberOfLayers) and/or the second parameter (srs-ResourceIndicator).

For example, for the codebook based PUSCH transmission, the terminal equipment is configured with the first parameter (precodingAndNumberOfLayers) and the second parameter (srs-ResourceIndicator); and for the non-codebook based PUSCH transmission, the terminal equipment is configured with the second parameter (srs-ResourceIndicator).

In some embodiments, when the terminal equipment is configured to apply the first TCI state to transmit the PUSCH, the terminal equipment transmits the PUSCH according to the first TPMI and/or the first SRI; and when the terminal equipment is configured to apply the second TCI state to transmit the PUSCH, the terminal equipment transmits the PUSCH according to the second TPMI and/or the second SRI.

For example, the terminal equipment is configured with the first parameter (precodingAndNumberOfLayers) and the third parameter (precodingAndNumberOfLayers2), and/or, the terminal equipment is configured with the second parameter (srs-ResourceIndicator) and the fourth parameter (srs-ResourceIndicator2). For example, in the case where the value of the field "applyIndicatedTCIState" is configured as "the first", the terminal equipment applies the first parameter (precodingAndNumberOfLayers) and/or the second parameter (srs-ResourceIndicator) to transmit the PUSCH, and in the case where the value of the field "applyIndicatedTCIState" is configured as "the second", the terminal equipment applies the third parameter (precodingAndNumberOfLayers2) and/or the fourth parameter (srs-ResourceIndicator2) to transmit the PUSCH.

Table 2 schematically explains the first parameter and the second parameter.

For example, as shown in Table 2, the first configuration information "ConfiguredGrantConfig" includes a parameter "rrc-ConfiguredUplinkGrant", which includes the first parameter (precodingAndNumberOfLayers) and the second parameter (srs-ResourceIndicator).

For example, as shown in Table 2, in the case where the value of the field "applyIndicatedTCIState" in the above first configuration information is configured as "the first" or "the second", the terminal equipment applies the first parameter (precodingAndNumberOfLayers) and/or the second parameter (srs-ResourceIndicator) in Table 2 to transmit the PUSCH.

For example, a value of the first parameter (precodingAndNumberOfLayers) is an integer ranging from 0 to 63, and a value of the second parameter (srs-ResourceIndicator) is an integer ranging from 0 to 15. Reference may be made to the related art for specific contents of the first parameter (precodingAndNumberOfLayers) and the second parameter (srs-ResourceIndicator), which are not limited in this disclosure.

Table 2

```
ConfiguredGrantConfig ::=          SEQUENCE {
    rrc-ConfiguredUplinkGrant          SEQUENCE {
        precodingAndNumberOfLayers          INTEGER (0..63)
        srs-ResourceIndicator               INTEGER (0..15)
    }
        }
```

Table 3 further schematically explains the first parameter and the second parameter.

For example, as shown in Table 3, the first configuration information "ConfiguredGrantConfig" includes the parameter "rrc-ConfiguredUplinkGrant", which includes the first parameter (precodingAndNumberOfLayers), the second parameter (srs-ResourceIndicator), the third parameter (precodingAndNumberOfLayers2),the fourth parameter (ssrs-ResourceIndicator2).

For example, in the case where the value of the field "applyIndicatedTCIState" in the above first configuration information is configured as "the first" or "the second", the terminal equipment is configured with the first parameter (precodingAndNumberOfLayers) and the third parameter (precodingAndNumberOfLayers2), and/or, the terminal equipment is configured with the second parameter (srs-ResourceIndicator) and the fourth parameter (srs-ResourceIndicator2).

For example, for the codebook based PUSCH transmission, the terminal equipment is configured with the first parameter (precodingAndNumberOfLayers) and the third parameter (precodingAndNumberOfLayers2), and the terminal equipment is configured with the second parameter (srs-ResourceIndicator) and the fourth parameter (srs-ResourceIndicator2). For the non-codebook based PUSCH transmission, the terminal equipment is configured with the second parameter (srs-ResourceIndicator) and the fourth parameter (srs-ResourceIndicator2).

For example, as shown in Table 3, in the case where the value of the field "applyIndicatedTCIState" in the above first configuration information is configured as "the first" or "the second", the terminal equipment only applies the first parameter (precodingAndNumberOfLayers) and/or the second parameter (srs-ResourceIndicator) to transmit the PUSCH, and ignores the third parameter (precodingAndNumberOfLayers2) and the fourth parameter (srs-ResourceIndicator2); or, in the case where the value of the field "applyIndicatedTCIState" in the above first configuration information is configured as "the first" or "the second", the terminal equipment only applies the third parameter (precodingAndNumberOfLayers2) and/or the fourth parameter (srs-ResourceIndicator2) to transmit the PUSCH, and ignores the first parameter (precodingAndNumberOfLayers) and the second parameter (srs-ResourceIndicator).

For example, values of the first parameter (precodingAndNumberOfLayers) and the third parameter (precodingAndNumberOfLayers2) are integers ranging from 0 to 63, and values of the second parameter (srs-ResourceIndicator) and the fourth parameter (ssrs-ResourceIndicator2) are integers ranging from 0 to 15, etc. Reference may be made to the related art for specific contents of the first parameter (precodingAndNumberOfLayers), the second parameter (srs-ResourceIndicator), the third parameter (precodingAndNumberOfLayers2) and the fourth parameter (srs-ResourceIndicator2), which are not limited in this disclosure.

Table 3

```
ConfiguredGrantConfig ::=          SEQUENCE {
    rrc-ConfiguredUplinkGrant          SEQUENCE {
        precodingAndNumberOfLayers          INTEGER (0..63)
        srs-ResourceIndicator               INTEGER (0..15)
        precodingAndNumberOfLayers2    INTEGER (0..63)
        srs-ResourceIndicator2         INTEGER (0..15)
    }
    }
```

Thus, according to the first configuration information shown in Table 1 to Table 3, the first transmission precoding matrix indication information (TPMI) and/or the first SRS resource indication information (SRI) may be configured. Hence, in the case where the terminal equipment is configured to apply the first transmission configuration indication (TCI) state or the second transmission configuration indication (TCI) state to transmit the PUSCH, the terminal equipment is able to accurately transmit the PUSCH according to the first transmission precoding matrix indication information (TPMI) and/or the first SRS resource indication information (SRI).

In some embodiments, the terminal equipment is further configured with two SRS resource sets, wherein in the case where the terminal equipment is configured to apply the first transmission configuration indication (TCI) state to transmit the PUSCH, the first transmission precoding matrix indication information (TPMI) and/or the first SRS resource indication information (SRI) is/are associated with a first SRS resource set in the two SRS resource sets, and in the case where the terminal equipment is configured to apply the second transmission configuration indication (TCI) state to transmit the PUSCH, the first transmission precoding matrix indication information (TPMI) and/or the first SRS resource indication information (SRI) is/are associated with a second SRS resource set in the two SRS resource sets.

In some embodiments, the terminal equipment further receives third configuration information, such as a parameter "SRS-Config". For example, a parameter "srs-ResourceSetToAddModList" or a parameter "srs-ResourceSetToAddModListDCI-0-2" in the parameter "SRS-Config" configures the two SRS resource sets.

For example, the terminal equipment is configured with two SRS resource sets, and in a case where the value of the field "applyIndicatedTCIState" in the first configuration information is configured as "the first", the first parameter (precodingAndNumberOfLayers) and/or the second parameter (srs-ResourceIndicator) configuring the first transmission precoding matrix indication information (TPMI) and/or the first SRS resource indication information (SRI) is/are associated with a first SRS resource set in the two SRS resource sets, and in a case where the value of the field "applyIndicatedTCIState" in the first configuration information is configured as "the second", the first parameter (precodingAndNumberOfLayers) and/or the second parameter (srs-ResourceIndicator) configuring the first transmission precoding matrix indication information (TPMI) and/or the first SRS resource indication information (SRI) is/are associated with a second SRS resource set in the two SRS resource sets.

For example, that the first parameter (precodingAndNumberOfLayers) and/or the second parameter (srs-ResourceIndicator) is/are associated with one of the two SRS resource sets indicates that what is indicated by the second parameter (srs-ResourceIndicator) is one or more SRS resources in the one of the two SRS resource sets, and/or that the PUSCH transmitted by the terminal equipment by applying the first parameter (precodingAndNumberOfLayers) and an SRS resource indicated by the second parameter (srs-ResourceIndicator) transmitted by the terminal equipment use identical PUSCH antenna ports.

Thus, the terminal equipment may determine the SRS resource set to which transmission of the PUSCH corresponds and corresponding SRS resources, thereby accurately transmitting the PUSCH.

In some embodiments, in the case where the terminal equipment is configured to apply the first transmission configuration indication (TCI) state and the second transmission configuration indication (TCI) state to transmit the PUSCH, it transmits the PUSCH according to the first transmission precoding matrix indication information (TPMI) and the second transmission precoding matrix indication information (TPMI) and/or according to the first SRS resource indication information (SRI) and the second SRS resource indication information (SRI).

For example, as shown in Table 1, in a case where the value of the field "applyIndicatedTCIState" is configured as "both", it indicates applying the first TCI state and the second TCI state to transmit the configured grant type 1 PUSCH.

For example, for the codebook based PUSCH transmission, the terminal equipment transmits the PUSCH according to "the first TPMI, the second TPMI, the first SRI and the second SRI", and for the non-codebook based PUSCH transmission, the terminal equipment transmits the PUSCH according to the first SRI and the second SRI.

In some embodiments, in the case where the terminal equipment is configured to apply the first transmission configuration indication (TCI) state and the second transmission configuration indication (TCI) state to transmit the PUSCH, the first transmission precoding matrix indication information (TPMI) is configured by the first parameter (precodingAndNumberOfLayers), and the second transmission precoding matrix indication information (TPMI) is configured by the third parameter (precodingAndNumberOfLayers2); and/or, the first SRS resource indication information (SRI) is configured by the second parameter (srs-ResourceIndicator), and the second SRS resource indication information (SRI) is configured by the fourth parameter (srs-ResourceIndicator2).

For example, as shown in Table 1, in the case where the value of the field "applyIndicatedTCIState" is configured as "both", the first TPMI is configured by an RRC parameter, i.e. the first parameter precodingAndNumberOfLayers), the first SRI is configured by an RRC parameter, i.e. the second parameter (srs-ResourceIndicator), the second TPMI is configured by an RRC parameter, i.e. the third parameter (precodingAndNumberOfLayers2), and the second SRI is configured by an RRC parameter, i.e. the fourth parameter (srs-ResourceIndicator2).

In some embodiments, in the case where the terminal equipment is configured to apply the first transmission configuration indication (TCI) state and the second transmission configuration indication (TCI) state to transmit the PUSCH, the terminal equipment is configured with the first parameter (precodingAndNumberOfLayers) and the third parameter (precodingAndNumberOfLayers2), and/or, the terminal equipment is configured with the second parameter (srs-ResourceIndicator) and the fourth parameter (srs-ResourceIndicator2).

For example, as shown in Table 1, in the case where the value of the field "applyIndicatedTCIState" is configured as "both", for the codebook based PUSCH transmission, the terminal equipment is configured with the first parameter (precodingAndNumberOfLayers) and the third parameter (precodingAndNumberOfLayers2), and the terminal equipment is configured with the second parameter (srs-ResourceIndicator) and the fourth parameter (srs-ResourceIndicator2); and for the non-codebook based PUSCH transmission, the terminal equipment is configured with the second parameter (srs-ResourceIndicator) and the fourth parameter (srs-ResourceIndicator2).

For example, Table 1 and Table 3 are still used for illustration. In the case where the value of the field "applyIndicatedTCIState" in Table 1 is configured as "both", the terminal equipment transmits the PUSCH by using the first parameter (precodingAndNumberOfLayers) and the third parameter (precodingAndNumberOfLayers2) and/or the second parameter (srs-ResourceIndicator) and the fourth parameter (srs-ResourceIndicator2) shown in Table 3.

Thus, according to the first configuration information shown in tables 1-3, the first transmission precoding matrix indication information (TPMI) and/or the first SRS resource indication information (SRI) may be configured. Thus, in the case where the terminal equipment is configured to apply the first transmission configuration indication (TCI) state and the second transmission configuration indication (TCI) state to transmit the PUSCH, the terminal equipment may accurately transmit the PUSCH according to the first transmission precoding matrix indication information (TPMI) and the second transmission precoding matrix indication information (TPMI) and/or the first SRS resource indication information (SRI) and the second SRS resource indication information (SRI).

In some embodiments, the terminal equipment is further configured with two SRS resource sets, wherein in the case where the terminal equipment is configured to apply the first transmission configuration indication (TCI) state and the second transmission configuration indication (TCI) state to transmit the PUSCH, the first transmission precoding matrix indication information (TPMI) and/or the first SRS resource indication information (SRI) is/are associated with a first SRS resource set in the two SRS resource sets, and the second transmission precoding matrix indication information (TPMI) and/or the second SRS resource indication information (SRI) is/are associated with a second SRS resource set in the two SRS resource sets.

For example, the two SRS resource sets are configured still via the parameter "srs-ResourceSetToAddModList" or the parameter "srs-ResourceSetToAddModListDCI-0-2" in the third configuration information (parameter "SRS-Config").

For example, in a case where the terminal equipment is configured with two SRS resource sets and the value of the field "applyIndicatedTCIState" is configured as "both", the first parameter (precodingAndNumberOfLayers) and/or the second parameter (srs-ResourceIndicator) configuring the first transmission precoding matrix indication information (TPMI) and/or configuring the first SRS resource indication information (SRI) is/are associated with a first SRS resource set in the two SRS resource sets, and the third parameter (precodingAndNumberOfLayers2) and/or the four parameter (srs-ResourceIndicator2) configuring the second transmission precoding matrix indication information (TPMI) and/or configuring the second SRS resource indication information (SRI) is/are associated with a second SRS resource set in the two SRS resource sets.

Thus, the terminal equipment may determine the SRS resource set and SRS resources to which the PUSCH transmission corresponds, thereby accurately transmitting the PUSCH.

In some embodiments, the terminal equipment is further configured with a multi-panel scheme (multipanelScheme), or, the terminal equipment is not configured with a multi-panel scheme (multipanelScheme), wherein the multiplex scheme (multipanelScheme) indicates to use a spatial division multiplexing (SDM) scheme or a single frequency network (SFN) scheme.

For example, the terminal equipment uses the multiplex scheme (multipanelScheme) to indicate that transmitting a PUSCH by using the spatial division multiplexing (SDM) scheme or the single frequency network (SFN) scheme corresponds to transmitting a PUSCH by using the STxMP SDM scheme and the STxMP SFN scheme shown in FIG. 3 and FIG. 4. Reference may be made to what is described above in this description for a specific process of transmitting the PUSCH, which shall not be repeated herein any further.

In some embodiments, the terminal equipment further receives fourth configuration information, such an as an RRC parameter "multipanelScheme". The RRC parameter "multipanelScheme" may configure the SDM scheme (SDMScheme), and the RRC parameter "multipanelScheme" may also be configured as the SFN scheme (SFNScheme).

Table 4 schematically explain the fourth configuration information. As shown in Table 4, the RRC parameter "multipanelScheme" corresponds to the fourth configuration information of this disclosure, and a value of "multipanelScheme" may be either "SDMScheme" or "SFNScheme".

### Table 4

| | |
|---|---|
| multipanelScheme | ENUMERATED{SDMScheme, SFNScheme} |

In some embodiments, the terminal equipment may also not be configured with the RRC parameter multipanelScheme.

In some embodiments, in the case where the terminal equipment is configured to apply the first transmission configuration indication (TCI) state or the second transmission configuration indication (TCI) state to transmit the PUSCH, the terminal equipment does not expect to be configured with the multi-panel scheme (multipanelScheme).

For example, the expression that "the terminal equipment does not expect to be configured with a multi-panel scheme" may be replaced with that "the terminal equipment is not configured or scheduled with a multi-panel scheme", or that "the terminal equipment does not receive fourth configuration information", or that "the network device does not configure or does not schedule a multi-panel scheme", or that "the network device does not transmit fourth configuration information", etc., which are not limited in this disclosure.

In some embodiments, the terminal equipment is configured with a multi-panel scheme (multipanelScheme) by the second configuration information (PUSCH-Config), or the terminal equipment is configured with a multi-panel scheme (multipanelScheme) by the first configuration information (ConfiguredGrantConfig).

For example, the multi-panel scheme (multipanelScheme) is configured in the first configuration information "ConfiguredGrantConfig", or the multi-panel scheme (multipanelScheme) is configured in the second configuration information "PUSCH-Config". Reference may be made to what is described above in this description for specific contents of the first configuration information "ConfiguredGrantConfig", which are not limited in this disclosure. Reference may be made to what is described above in this description for specific contents of the second configuration information "PUSCH-Config", which are not limited in this disclosure.

In some embodiments, in the case where the terminal equipment is configured to apply the first transmission configuration indication (TCI) state or the second transmission configuration indication (TCI) state to transmit the PUSCH, when the terminal equipment is configured with a multi-panel scheme (multipanelScheme) or when the terminal equipment is not configured with a multi-panel scheme (multipanelScheme), the PUSCH is transmitted according to a single transmission and reception point (sTRP) scheme; and/or, in the case where the terminal equipment is configured to apply the first transmission configuration indication (TCI) state and the second transmission configuration indication (TCI) state to transmit the PUSCH, when the terminal equipment is configured with a multi-panel scheme (multipanelScheme) and the multi-panel scheme (multipanelScheme) indicates to use the spatial division multiplexing (SDM) scheme, the PUSCH is transmitted according to the SDM scheme; and when the terminal equipment is configured with a multi-panel scheme (multipanelScheme) and the multi-panel scheme (multipanelScheme) indicates to use the single frequency network (SFN) scheme, the PUSCH is transmitted according to the SFN scheme; and when the terminal equipment is not configured with a multi-panel scheme (multipanelScheme), the PUSCH is transmitted according to a time-division multiplexing (TDM) scheme.

For example, in the case where the value of the field "applyIndicatedTCIState" is configured as "the first" or "the second", no matter whether the terminal equipment is configured with "multipanelScheme", the terminal equipment uses the sTRP scheme to transmit the PUSCH. For example, the terminal equipment uses the sTRP scheme shown in FIG. 5 to transmit the PUSCH, which shall not be repeated herein any further.

For example, use of the sTRP scheme includes at least one of the following: using one SRS resource set; use one TPMI and/or one SRI. One SRS resource set may be a first SRS resource set or a second SRS resource set, one TPMI may be a first TPMI or a second TPMI, and one SRI may be a first SRI or a second SRI.

For example, in the case where the value of the field "applyIndicatedTCIState" is configured as "both", if the terminal equipment is configured with "multipaneScheme" and "multipaneScheme" is configured as "SDMScheme", the terminal equipment uses the SDM scheme to transmit the PUSCH; if the terminal equipment is configured with "multipaneScheme" and "multipaneScheme" is configured as "SFNSscheme", the terminal equipment uses the SFN scheme to transmit the PUSCH; and if the terminal equipment is not configured with "multipanelScheme", the terminal equipment uses the TDM scheme to transmit the PUSCH.

For example, use of the SDM scheme includes at least one of the following: using two SRS resource sets; using two TPMIs and/or two SRIs; and applying the first TPMI and/or the first SRI to a part of transport layers of one PUSCH on one transmission occasion, and applying the second TPMI and/or the second SRI to another part of the transport layers of the PUSCH on the transmission occasion. For example, the terminal equipment uses the SDM scheme shown in FIG. 3 to transmit the PUSCH, which shall not be repeated herein any further.

For example, use of the SFN scheme includes at least one of the following: using two SRS resource sets; using two TPMIs and/or two SRIs; and applying the first TPMI and/or the first SRI to all transport layers of a PUSCH on a transmission occasion, and applying the second TPMI and/or the second SRI to all transport layers of the PUSCH on the transmission occasion. For example, the terminal equipment uses the SFN scheme shown in FIG. 4 to transmit the PUSCH, which shall not be repeated herein any further.

For example, use of the TDM scheme includes at least one of the following: using two SRS resource sets; using two TPMIs and/or two SRIs; and applying the first TPMI and/or the first SRI to all transport layers of one PUSCH on a transmission occasion associated with a first SRS resource set, and applying the second TPMI and/or the second SRI to all transport layers of the PUSCH on a transmission occasion associated with a second SRS resource set. For example, the terminal equipment uses the TDM scheme shown in FIG. 6 to transmit the PUSCH, which shall not be repeated herein any further.

Hence, for different configuration combinations, device behaviors for performing configured grant type 1 PUSCH transmission is accurately defined. Thus, ambiguities in understanding transmission parameters actually applied to a configured grant type 1 PUSCH by the terminal equipment and the network device may be avoided, thereby avoiding failures in PUSCH transmission, and achieving reliable transmission of uplink data.

"How the terminal equipment determines an association between PT-RS port(s) and DM-RS port(s)" and "how the terminal equipment determines the actually applied number of PT-RS port(s)" shall be explained below in detail.

For "how the terminal equipment determines an association between PT-RS port(s) and DM-RS port(s)".

In some embodiments, in the case where the terminal equipment is configured to apply the first transmission configuration indication (TCI) state or the second transmission configuration indication (TCI) state to transmit the PUSCH, and the terminal equipment is configured with a multi-panel scheme (multipanelScheme) and the multi-panel scheme (multipanelScheme) indicates to use the spatial division multiplexing (SDM) scheme, the association between PT-RS port(s) and DM-RS port(s) includes that: PT-RS port 0 is associated with a 1st scheduled DM-RS port, or PT-RS port 0 is associated with a 1st DM-RS port sharing the PT-RS port 0, and PT-RS port 1 is associated with a 1st DM-RS port sharing PT-RS port 1.

Thus, in the case where the terminal equipment is configured to apply the first TCI state or the second TCI state and use SDM scheme to transmit the PUSCH, the association between PT-RS port(s) and DM-RS port(s) may be determined according to a predefined rule. Hence, ambiguities in understanding transmission parameters actually applied to a configured grant type 1 PUSCH by the terminal equipment and the network device may be avoided, thereby avoiding failures in PUSCH transmission, and achieving reliable transmission of uplink data.

For example, in the case where the value of the field "applyIndicatedTCIState" is configured as "the first" or "the second" and the terminal equipment is configured with "multipanelScheme" and "multipanelScheme" is configured as "SDMScheme", the association between PT-RS port(s) and DM-RS port(s) is determined in a first mode as follows that: PT-RS port 0 is associated with a 1st scheduled DM-RS port.

For example, 'the 1st scheduled DM-RS port' refers to a 1st DM-RS port in DM-RS port(s) used for the configured grant type 1 PUSCH. For configured grant type 1, parameters needed in uplink transmission (including DM-RS port(s)) are configured in a semi-static manner. In one or more configured DM-RS port(s), a 1st DM-RS port is associated with PT-RS port 0. For example, the expression 'the 1st scheduled DM-RS port' may be replaced with 'a 1st DM-RS port', etc., which is not limited in this disclosure.

For example, in the case where the value of the field "applyIndicatedCCIState" is configured as "the first" or "the second" and the terminal equipment is configured with "multipaneScheme" and "multianelScheme" is configured as "SDMScheme", the association between PT-RS port(s) and DM-RS port(s) is determined in a second mode as follows that: PT-RS port 0 is associated with a 1st DM-RS port sharing PT-RS port 0, and PT-RS port 1 is associated with a 1st DM-RS port sharing PT-RS port 1.

For example, a DM-RS port sharing a PT-RS port is determined according to a second mode as below that: PUSCH antenna ports 1000 and 1002 share PT-RS port 0, and PUSCH antenna ports 1001 and 1003 share PT-RS port 1; one or more DM-RS port(s) transmitted via PUSCH antenna ports 1000 and 1002 share(s) PT-RS port 0, and one or more DM-RS port(s) transmitted via PUSCH antenna ports 1001 and 1003 share(s) PT-RS port 1. For example, reference may be made to the related art for how to determine DM-RS port(s) which are transmitted via PUSCH antenna ports 1000 and 1002 and DM-RS port(s) which are transmitted via PUSCH antenna ports 1001 and 1003, which are not limited in this disclosure. For example, the above expression "a DM-RS port" may be replaced with "a transport layer", etc., which is not limited in this disclosure.

In some embodiments, the association between PT-RS port(s) and DM-RS port(s) further includes that: in a case where the terminal equipment is configured by a fifth parameter as a PT-RS port, PT-RS port 0 is associated with a 1st scheduled DM-RS port; and/or, in a case where the terminal equipment is configured by the fifth parameter as two PT-RS port(s), PT-RS port 0 is associated with a 1st DM-RS port sharing PT-RS port 0, and PT-RS port 1 is associated with a 1st DM-RS port sharing PT-RS port 1.

For example, the fifth parameter is "maxNrofPorts", which is configured in an RRC parameter "PTRS-UplinkConfig" and denotes a maximum number of PT-RS port(s). For example, the RRC parameter "PTRS-UplinkConfig" further includes a sixth parameter "maxNrofPortsforSDM", which denotes a maximum number of PT-RS port(s) applied to the SDM scheme, wherein the fifth parameter "maxNrofPorts" and the sixth parameter "maxNrofPortsforSDM" are different parameters.

For example, when the terminal equipment is configured by "maxNrofPorts" as one PT-RS port, in the case where the value of the field "applyIndicatedTCIState" is configured as "the first" or "the second", the terminal equipment is configured with "multipanelScheme" and "multipanelScheme" is configured as "SDMScheme", the association between PT-RS port(s) and DM-RS port(s) is determined according to the first mode described above.

For example, when the terminal equipment is configured by "maxNrofPorts" as two PT-RS port(s), in the case where the value of the field "applyIndicatedTCIState" is configured as "the first" or "the second", the terminal equipment is configured with "multipanelScheme" and "multipanelScheme" is configured as "SDMScheme", the association between PT-RS port(s) and DM-RS port(s) is determined according to the second mode described above.

Thus, in the case where the terminal equipment is configured to apply the first TCI state or the second TCI state and use SDM scheme to transmit the PUSCH, the association between PT-RS port(s) and DM-RS port(s) may be determined according to predefined rules.

In some embodiments, in the case where the terminal equipment is configured to apply the first transmission configuration indication (TCI) state and the second transmission configuration indication (TCI) state to transmit the PUSCH, the terminal equipment is configured with a multi-panel scheme (multipanelScheme) and the multi-panel scheme (multipanelScheme) indicates to use the spatial division multiplexing (SDM) scheme, the association between PT-RS port(s) and DM-RS port(s) includes that: PT-RS port 0 is associated with a 1st scheduled DM-RS port, or PT-RS port 0 is associated with a 1st scheduled DM-RS port corresponding to the first transmission precoding matrix indication information (TPMI) and/or the first SRS resource indication information (SRI), and PT-RS port 1 is associated with a 1st scheduled DM-RS port corresponding to the second transmission precoding matrix indication information (TPMI) and/or the second SRS resource indication information (SRI).

For example, in the case where the value of the field "applyIndicatedTCIState" is configured as "both", the terminal equipment is configured with "multipanelScheme" and "multipanelScheme" is configured as "SDMScheme", association between PT-RS port(s) and DM-RS port(s) is determined in a third mode as below that: PT-RS port 0 is associated with a 1st scheduled DM-RS port.

For example, in the case where the value of the field "applyIndicatedTCIState" is configured as "both", the terminal equipment is configured with "multipanelScheme" and "multipanelScheme" is configured as "SDMScheme", the association between PT-RS port(s) and DM-RS port(s) is determined in a fourth mode as below that: PT-RS port 0 is associated with a 1st scheduled DM-RS port corresponding to the first TPMI and/or the first SRI, and PT-RS port 1 is associated with a 1st scheduled DM-RS port corresponding to the second TPMI and/or the second SRI. Reference may be made to existing techniques in the SDM scheme for how to determine DM-RS port(s) which correspond to the first TPMI and/or the first SRI and DM-RS port(s) and which correspond to the second TPMI and/or the second SRI, which are not limited in this disclosure. For example, the expression 'a 1st scheduled DM-RS port' may be replaced with 'a 1st DM-RS port', etc., which is not limited in this disclosure.

For example, in the case where the value of the field "applyIndicatedTCIState" is configured as "both", the terminal equipment is configured with "multipanelScheme" and "multipanelScheme" is configured as "SDMScheme", the association between PT-RS port(s) and DM-RS port(s) is determined according to the above third or fourth mode, and in other cases than the above two cases, the association between PT-RS port(s) and DM-RS port(s) is determined according to the first or second mode described above.

In some embodiments, the association between PT-RS port(s) and DM-RS port(s) further includes that: in a case where the terminal equipment is configured by a sixth parameter as one PT-RS port, PT-RS port 0 is associated with a 1st scheduled DM-RS port; and/or, in a case where the terminal equipment is configured by the sixth parameter as two PT-RS port(s), PT-RS port 0 is associated with a 1st scheduled DM-RS port corresponding to the first transmission precoding matrix indication information (TPMI) and/or the first SRS resource indication information (SRI), and PT-RS port 1 is associated with a first scheduled DM-RS port corresponding to the second transmission precoding matrix indication information (TPMI) and/or the second SRS resource indication information (SRI).

For example, the sixth parameter is the above parameter 'maxNrofPortsforSDM'.

For example, when the terminal equipment is configured by "maxNrofPortsforSDM" as one PT-RS port, in the case where the value of the field "applyIndicatedTCIState" is configured as "both", the terminal equipment is configured with "multipanelScheme" and "multipanelScheme" is configured as "SDMScheme", the association between PT-RS port(s) and DM-RS port(s) is determined according to the above third mode.

For example, when the terminal equipment is configured by "maxNrofPortsforSDM" as 2 PT-RS port(s), in the case where the value of the field "applyIndicatedTCIState" is configured as "both", the terminal equipment is configured with "multipanelScheme" and "multipanelScheme" is configured as "SDMScheme", the association between PT-RS port(s) and DM-RS port(s) is determined according to the above fourth mode.

Thus, in the case where the terminal equipment is configured to apply the first TCI state and the second TCI state and use the SDM scheme to transmit the PUSCH, the association between PT-RS port(s) and DM-RS port(s) may be determined according to predefined rules.

For 'how the terminal equipment determines the actually applied number of PT-RS port(s) '.

In some embodiments, in the case where the terminal equipment is configured to apply the first transmission configuration indication (TCI) state or the second transmission configuration indication (TCI) state to transmit the PUSCH, the actually applied number of PT-RS port(s) is determined according to the first transmission precoding matrix indication information (TPMI) and/or the first SRS resource indication information (SRI).

Thus, in the case where the terminal equipment is configured to apply the first TCI state or the second TCI state to transmit the PUSCH, the actually applied number of PT-RS port(s) may be determined. Hence, ambiguities in understanding transmission parameters actually applied to a configured grant type 1 PUSCH by the terminal equipment and the network device may be avoided, thereby avoiding failures in PUSCH transmission, and achieving reliable transmission of uplink data.

For example, the expression 'the actually applied number of PT-RS port(s) ' may be replaced with 'actual number of PT-RS port(s)', etc., which is not limited in this disclosure.

For example, in the case where the value of the field "applyIndicatedTCIState" is configured as "the first" or "the second", the actual number of PT-RS port(s) is determined according to the first parameter (precodingAndNumberOfLayers) and/or the second parameter (srs-ResourceIndicator).

For example, in the case where the value of the field "applyIndicatedTCIState" is configured as "the first" or "the second", the terminal equipment is configured with "multipanelScheme" and "multipanelScheme" is configured as "SDMScheme", the actual number of PT-RS port(s) is determined according to the first parameter (precodingAndNumberOfLayers) and/or the second parameter (srs-ResourceIndicator).

In some embodiments, in the case where the PUSCH is a non-codebook based PUSCH, the actually applied number of PT-RS port(s) is determined according to the first SRS resource indication information (SRI), and/or, in the case where the PUSCH is a partial-coherent codebook based PUSCH, the actually applied number of PT-RS port(s) is determined according to the first transmission precoding matrix indication information (TPMI), and/or, in the case where the PUSCH is a non-coherent codebook based PUSCH, the actually applied number of PT-RS port(s) is determined according to the first transmission precoding matrix indication information (TPMI).

For example, in the case where the value of the field "applyIndicatedTCIState" is configured as "the first" or "the second", for a non-codebook based PUSCH, the actually applied number of PT-RS port(s) is determined according to the second parameter (srs-ResourceIndicator); for a partial-coherent codebook based PUSCH, the actually applied number of PT-RS port(s) is determined according to the first parameter (precodingAndNumberOfLayers); and for a non-coherent codebook based PUSCH, the actually applied number of PT-RS port(s) is determined according to precodingAndNumberOfLayers. Reference may be made to the related art for how to determine the actually applied number of PT-RS port(s) according to the first parameter (precodingAndNumberOfLayers) and/or the second parameter (srs-ResourceIndicator), which is not limited in this disclosure.

How the terminal equipment determines the association between PT-RS port(s) and DM-RS port(s) and how the terminal equipment determines the actually applied number of PT-RS port(s) are described above, which are summarized below by way of examples.

For example, suppose "multipanelScheme" is configured as SDMScheme, the value of "applyIndicatedTCIState" is configured as "the second", and the fifth parameter (maxNrofPorts) is configured as 2,

for the codebook based configured grant type 1 PUSCH, when "applyIndicatedTCIState" is configured as "the second", the terminal equipment determines a precoding matrix according to the first parameter (precodingAndNumberOfLayers), assuming that the determined precoding matrix is $\dfrac{1}{2\sqrt{2}}\begin{bmatrix} 1 & 1 & 0 & 0 \\ 0 & 0 & 1 & 1 \\ 1 & -1 & 0 & 0 \\ 0 & 0 & 1 & -1 \end{bmatrix}$ ; the terminal equipment determines that used DM-RS port(s) are 0~3 according to the first configuration information (ConfiguredGrantConfig); when the fifth parameter (maxNrofPorts) is configured as 2, the association between PT-RS port(s) and DM-RS port(s) is as follows that: PT-RS port 0 is associated with a 1st DM-RS port sharing PT-RS port 0, and PT-RS port 1 is associated with a 1st DM-RS port sharing PT-RS port 1; DM-RS port(s) 0 and 1 are transmitted via PUSCH antenna ports 1000 and 1002, thus sharing PT-RS port 0; DM-RS port(s) 2 and 3 are transmitted via PUSCH antenna ports 1001 and 1003, thus sharing PT-RS port 1; according to the first parameter (precodingAndNumberOfLayers), it may be known that a transmitted DM-RS port is associated with two PT-RS port(s), hence, an actual number of PT-RS port(s) is 2; and according to the association between PT-RS port(s) and DM-RS port(s), it may be known that PT-RS port 0 is associated with DM-RS port 0, and PT-RS port 1 is associated with DM-RS port 2.

For example, suppose "multipanelScheme" is configured as SDMScheme, the value of "applyIndicatedTCIState" is configured as "the second", and the fifth parameter (maxNrofPorts) is configured as 2,

for the codebook based configured grant type 1 PUSCH, when "applyIndicatedTCIState" is configured as "the second", the terminal equipment determines a precoding matrix according to the first parameter (precodingAndNumberOfLayers), assuming that the determined precoding matrix is $\dfrac{1}{2}\begin{bmatrix} 0 & 0 \\ 1 & 0 \\ 0 & 0 \\ 0 & 1 \end{bmatrix}$ ; the terminal equipment determines that used DM-RS port(s) are 0 and 1 according to the first configuration information (ConfiguredGrantConfig); when the fifth parameter (maxNrofPorts) is configured as 2, the association between PT-RS port(s) and DM-RS port(s) is as follows that: PT-RS port 0 is associated with a 1st DM-RS port sharing PT-RS port 0, and PT-RS port 1 is associated with a 1st DM-RS port sharing PT-RS port 1; DM-RS port(s) 0 and 1 are transmitted via PUSCH antenna ports 1001 and 1003, thus sharing PT-RS port 1; according to the first parameter (precodingAndNumberOfLayers), it may be known that a transmitted DM-RS port is associated with one PT-RS port, hence, the actual number of PT-RS port(s) is 1 (although the fifth parameter (maxNrofPorts) is configured as 2); and according to the association between PT-RS port(s) and DM-RS port(s), it may be known that PT-RS port 1 is associated with DM-RS port 0.

For example, suppose "multipanelScheme" is configured as SDMScheme, the value of "applyIndicatedCIState" is configured as "the second", and the fifth parameter (maxNrofPorts) is configured as 1,

for the configured grant type 1 PUSCH based on codebooks, when "applyIndicatedTCIState" is configured as "the second", the terminal equipment determines a precoding matrix according to the first parameter (precodingAndNumber-

OfLayers), assuming that the determined precoding matrix is $\dfrac{1}{2}\begin{bmatrix} 0 \\ 1 \\ 0 \\ 1 \end{bmatrix}$ ; the terminal equipment determines that a used DM-RS port is 0 according to the first configuration information (ConfiguredGrantConfig); when the fifth parameter (maxNrofPorts) is configured as 1, the association between PT-RS port(s) and DM-RS port(s) is that: PT-RS port 0 is associated with a 1st scheduled DM-RS port; when the fifth parameter (maxNrofPorts) is configured as 1, the actual number of PT-RS port(s) is 1; according to the association between PT-RS port(s) and DM-RS port(s), it may be known that PT-RS port 0 is associated with DM-RS port 0.

For example, in the case where "multipanelScheme" is configured as SDMScheme and the value of the field "applyIndicatedTCIState" is configured as "both", the association between PT-RS port(s) and DM-RS port(s) is determined according to the above third or fourth mode; in the case where "multipanelScheme" is configured as SDMScheme and the value of "applyIndicatedTCIState" is configured as "the first" or "the second", the association between PT-RS port(s) and DM-RS port(s) is determined according to the above first or second mode; in the case where 'multipanelScheme' is configured as SFNScheme, the association between PT-RS port(s) and DM-RS port(s) is determined according to the above first or second mode; and in the case where the terminal equipment is not configured with "multipanelScheme", the association between PT-RS port(s) and DM-RS port(s) is determined according to the above first or second mode. For example, that the association between PT-RS port(s) and DM-RS port(s) is determined according to the first mode may also be referred to as that the association between PT-RS port(s) and DM-RS port(s) is determined by a row in which "value" is "0" in Table 5 (corresponding to "Table 7.3.1.1.2-25" in the standard), that the association between PT-RS port(s) and DM-RS port(s) is determined according to the second mode may also be referred to as that the association between PT-RS port(s) and DM-RS port(s) is determined by a row in which "value of MSB" and "value of LSB" are "00" in Table 6 (corresponding to "Table 7.3.1.1.2-26" in the standard), that the association between PT-RS port(s) and DM-RS port(s) is determined according to the third mode may also be referred to as that the association between PT-RS port(s) and DM-RS port(s) is determined by a row in which "value" is "0" in Table 5 (corresponding to "Table 7.3.1.1.2-25" in the standard) below, and that the association between PT-RS port(s) and DM-RS port(s) is determined according to the fourth mode may also be referred to as that the association between PT-RS port(s) and DM-RS port(s) is determined by a row in which "value of MSB" and "value of LSB" are "00" in Table 7 (corresponding to "Table 7.3.1.1.2-25a" in the standard).

For example, descriptions and modifications in English in corresponding standards are as follows:
"For codebook or non-codebook based UL transmission, the association between UL PT-RS port(s) and DM-RS port(s) is signalled by PTRS-DMRS association field(s) in DCI format 0_1 and DCI format 0_2. Except for the case when the higher layer parameter multipanelScheme is configured, for a PUSCH corresponding to a configured grant Type 1 transmission, the UE may assume the association between UL PT-RS port(s) and DM-RS port(s) defined by value 0 in Table 7.3.1.1.2-25, value "00" in Table 7.3.1.1.1.2-26 described in Clause 7.3.1 of [5, TS38.212].[ For a PUSCH corresponding to a configured grant Type 1 transmission and when the higher layer parameter multipanelScheme is set to 'SFNscheme', the UE may assume the association between UL PT-RS port(s) and DM-RS port(s) defined by value 0 in Table 7.3.1.1.2-25 or value "00" in Table 7.3.1.1.1.2-26 described in Clause 7.3.1 of [5, TS38.212]. For a PUSCH corresponding to a configured grant Type 1 transmission, when the higher layer parameter multipanelScheme is set to 'sdmscheme' and the higher layer parameter applyIndicatedTCIState in ConfiguredGrantConfig is set to 'both', the UE may assume the association between UL PT-RS port(s) and DM-RS port(s) defined by value 0 in Table 7.3.1.1.2-25 or value "00" in Table 7.3.1.1.1.2-25a described in Clause 7.3.1 of [5, TS38.212]. For a PUSCH corresponding to a configured grant Type 1 transmission, when the higher layer parameter multipanelScheme is set to 'sdmscheme' and the higher layer parameter applyIndicatedTCIState in ConfiguredGrantConfig is set to 'the first' or 'the second', the UE may assume the association between UL PT-RS port(s) and DM-RS port(s) defined by value 0 in Table 7.3.1.1.2-25 or value "00" in Table 7.3.1.1.1.2-26 described in Clause 7.3.1 of [5, TS38.212].]"

Table 5: PTRS-DMRS association or second PTRS-DMRS association for UL PTRS port 0

| (Table 7.3.1.1.2-25: PTRS-DMRS association or second PTRS-DMRS association for UL PTRS port 0) | |
|---|---|
| Value | DMRS port |
| 0 | 1st scheduled DMRS port |
| 1 | 2nd scheduled DMRS port |
| 2 | 3rd scheduled DMRS port |
| 3 | 4th scheduled DMRS port |

Table 6: PTRS-DMRS association for UL PTRS port 0 or for the actual UL PT-RS port

| (Table 7.3.1.1.2-25A: PTRS-DMRS association for UL PTRS port 0 or for the actual UL PT-RS port) | | | | |
|---|---|---|---|---|
| Value of MSB | DMRS port | Value of LSB | | DMRS port |
| 0 | 1st scheduled DMRS port corresponding to SRS resource indicator field and/or Precoding information and number of layers field | | 0 | 1st scheduled DMRS port corresponding to Second SRS resource indicator field and/or Second Precoding information field |
| 1 | 2nd scheduled DMRS port corresponding to SRS resource indicator field and/or Precoding information and number of layers field | | 1 | 2nd scheduled DMRS port corresponding to Second SRS resource indicator field and/or Second Precoding information field |

For example, "SRS resource indicator field and/or Precoding information and number of layers" shown in Table 6 corresponds to the above "the second parameter and/or the first parameter" in this disclosure, and "Second SRS resource indicator field and/or Second Precoding information field" corresponds to the above "the fourth parameter and/or the third parameter" in this disclosure.

Table 7: PTRS-DMRS associations or second PTRS-DMRS associations for UL PTRS ports 0 and 1

| (Table 7.3.1.1.2-26: PTRS-DMRS association or Second PTRS-DMRS association for UL PTRS ports 0 and 1) | | | |
|---|---|---|---|
| Value of MSB | DMRS port | Value of LSB | DMRS port |
| 0 | 1st DMRS port which shares PTRS port 0 | 0 | 1st DMRS port which shares PTRS port 1 |
| 1 | 2nd DMRS port which shares PTRS port 0 | 1 | 2nd DMRS port which shares PTRS port 1 |

For example, the expression "1st DMRS port which shares PTRS port 0" shown in Table 7 may be replaced with "1st scheduled DMRS port which shares PTRS port 0", etc. Replacement methods for other contents shown in Table 7 are similar to the above contents, and shall not be enumerated herein any further.

In some embodiments, in a case where the terminal equipment is configured to apply the first transmission configuration indication (TCI) state and the second transmission configuration indication (TCI) state to transmit the PUSCH, the terminal equipment is configured with a multipanelScheme, the multipanelScheme indicates to use the spatial division multiplexing (SDM) scheme and the terminal equipment is configured by a sixth parameter (maxNrof-PortsforSDM) as 2 PT-RS port(s), the actually applied number of applied PT-RS port(s) is 2.

For example, the expression 'the actually applied number of applied PT-RS port(s) is 2' may be replaced with 'the actual number of PT-RS port(s) is 2'.

For example, in the case where "multipanelScheme" is configured as SDMScheme and a value in the field "applyIndicatedTCIState" is configured as "both", if the sixth parameter "maxNrofPortsforSDM" is configured as 2 PT-RS port(s), the actual number of PT-RS port(s) is 2.

Therefore, in the case where the terminal equipment is configured to apply the first transmission configuration indication (TCI) state and the second transmission configuration indication (TCI) state to transmit the PUSCH, the actual number of PT-RS port(s) may be determined directly according to the sixth parameter "maxNrofPortsforSDM", thereby definitely defining device behaviors of the terminal equipment. Thus, ambiguities in understanding transmission parameters actually applied to configured grant type 1 PUSCH by the terminal equipment and the network device may be avoided, thereby avoiding failures in PUSCH transmission, and achieving reliable transmission of uplink data.

In some embodiments, the terminal equipment is configured with a first list (dl-OrJointTCI-StateList) and has two indicated transmission configuration indication states (TCI states).

For example, what described above is applicable to a terminal equipment that supports mTRP unified TCI. Conditions that the terminal equipments need to satisfy to support the mTRP unified TCI include that: the terminal equipment is configured with a first list (dl-OrJointTCI-StateList) and has two indicated TCI states.

For example, "being configured with dl-OrJointTCI-StateList" indicates that the terminal equipment supports unified TCI, and that "the terminal equipment maintains two indicated TCI states" indicates that the terminal equipment supports the mTRP unified TCI. 'The two indicated TCI states' may be indicated by DCI and/or an MAC CE. Reference may be made to relevant techniques in mTRP unified TCI for the DCI and/or the MAC CE, which are not limited in this disclosure.

Therefore, in the case where the terminal equipment is configured with the first list (dl-OrJointTCI-StateList) and has two indicated transmission configuration indication states (TCI states), the transmission parameters actually applied to the configured grant type 1 PUSCH may be determined according to the above methods, thereby avoiding failures in PUSCH transmission and achieving reliable transmission of uplink data.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It can be seen from the above embodiments that in the case where the terminal equipment is configured to apply the first transmission configuration indication (TCI) state or the second transmission configuration indication (TCI) state to transmit the PUSCH, the terminal equipment transmits the PUSCH according to the first TPMI and/or the first SRI. Thus, ambiguities in understanding transmission parameters actually applied to a configured grant type 1 PUSCH by the terminal equipment and the network device may be avoided, thereby avoiding failures in PUSCH transmission, and achieving reliable transmission of uplink data.

Embodiments of a second aspect

The embodiments of this disclosure provide a data reception method, applicable to a network device side. The embodiments of this disclosure may be implemented in combination with the embodiments of the first aspect, or, the embodiments of this disclosure may be implemented separately, with contents identical to those in the embodiments of the first aspect being not going to be described herein any further.

FIG. 8 is a schematic diagram of the data reception method of the embodiments of this disclosure. As shown in FIG. 8, the method includes:

801: the network device configures a terminal equipment to apply a first transmission configuration indication (TCI) state and/or a second transmission configuration indication (TCI) state; and

802: the network device receives a physical uplink shared channel (PUSCH) corresponding to a configured grant type 1 transmitted by the terminal equipment; wherein in a case where the terminal equipment is configured to apply the first transmission configuration indication (TCI) state or the second transmission configuration indication (TCI) state to transmit the physical uplink shared channel (PUSCH), the terminal equipment transmits the physical uplink shared channel (PUSCH) according to a first transmission precoding matrix indicator (TPMI) and/or a first SRS resource indicator (SRI).

Therefore, in the case where the terminal equipment is configured to apply the first transmission configuration indication (TCI) state and the second transmission configuration indication (TCI) state to transmit the PUSCH, the terminal equipment transmits the PUSCH according to the first TPMI and/or the first SRI. Thus, ambiguities in understanding transmission parameters actually applied to a configured grant type 1 PUSCH by the terminal equipment and the network device may be avoided, thereby avoiding failures in PUSCH transmission, and achieving reliable transmission of uplink data.

It should be noted that FIG. 8 only schematically illustrates the embodiments of this disclosure, and the terminal equipment is taken as an example; however, this disclosure is not limited thereto. For example, an order of execution of the operations may be appropriately adjusted, and furthermore, some other operations may be added, or some operation therein may be reduced, and objects of the above operations may also be adjusted. And appropriate variants may be made by those skilled in the art according to the above contents, without being limited to what is contained in FIG. 8.

In some embodiments, the receiving a PUSCH corresponding to a configured grant type 1 transmitted by the terminal equipment further includes: in the case where the terminal equipment is configured to apply the first transmission configuration indication (TCI) state and the second transmission configuration indication (TCI) state to transmit the PUSCH, receiving the PUSCH transmitted by the terminal equipment according to the first transmission precoding matrix indication information (TPMI) and the second transmission precoding matrix indication information (TPMI) and/or according to the first SRS resource indication information (SRI) and the second SRS resource indication information (SRI).

In some embodiments, the method further includes: configuring a multi-panel scheme (multipanelScheme) for the terminal equipment; or, not configuring a multi-panel scheme (multipanelScheme) for the terminal equipment; wherein the multi-panel scheme (multipanelScheme) indicates to use a spatial division multiplexing (SDM) scheme or a single frequency network (SFN) scheme.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It can be seen from the above embodiments that in the case where the terminal equipment is configured to apply the first TCI state or the second TCI state to transmit the PUSCH, the terminal equipment transmits the PUSCH according to the first TPMI and/or the first SRI. Thus, ambiguities in understanding transmission parameters actually applied to a configured grant type 1 PUSCH by the terminal equipment and the network device may be avoided, thereby avoiding failures in PUSCH transmission, and achieving reliable transmission of uplink data.

Embodiments of a third aspect

The embodiments of this disclosure provide a data transmission apparatus. The apparatus may be, for example, a terminal equipment, or one or some components or assemblies configured in the terminal equipment. Contents in this embodiment identical to those in the embodiments of the first aspect shall not be described herein any further.

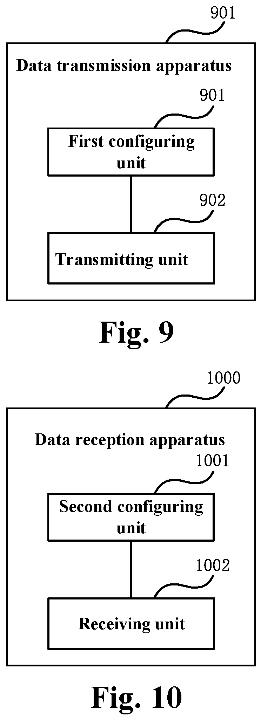

FIG. 9 is a schematic diagram of the data transmission apparatus of the embodiments of this disclosure. As shown in FIG. 9, the data transmission apparatus 900 includes:

a first configuring unit 901 configured to apply a first transmission configuration indication (TCI) state and/or a second transmission configuration indication (TCI) state; and

a transmitting unit 902 configured to transmit a physical uplink shared channel (PUSCH) corresponding to a configured grant type 1 according to the first transmission configuration indication (TCI) state and/or the second transmission configuration indication (TCI) state;

wherein in a case where the first configuring unit 901 is configured to apply the first transmission configuration indication (TCI) state or the second transmission configuration indication (TCI) state to transmit the physical uplink shared channel (PUSCH), the transmitting unit 902 transmits the physical uplink shared channel (PUSCH) according to a first transmission precoding matrix indicator (TPMI) and/or a first SRS resource indicator (SRI).

Hence, in the case where the terminal equipment is configured to apply the first TCI state or the second TCI state to transmit the PUSCH, the terminal equipment transmits the PUSCH according to the first TPMI and/or the first SRI. Thus, ambiguities in understanding transmission parameters actually applied to a configured grant type 1 PUSCH by the terminal equipment and the network device may be avoided, thereby avoiding failures in PUSCH transmission, and achieving reliable transmission of uplink data.

In some embodiments, in the case where the first configuring unit 901 is configured to apply the first transmission configuration indication (TCI) state or the second transmission configuration indication (TCI) state to transmit the physical uplink shared channel (PUSCH), the first transmission precoding matrix indicator (TPMI) is configured by a first parameter, and/or the first SRS resource indicator (SRI) is configured by a second parameter.

In some embodiments, in the case where the first configuring unit 901 is configured to apply the first transmission configuration indication (TCI) state or the second transmission configuration indication (TCI) state to transmit the physical uplink shared channel (PUSCH), the terminal equipment is configured with the first parameter and/or the second parameter, or, the terminal equipment is configured with the first parameter and a third parameter, and/or, the terminal equipment is configured with the second parameter and a fourth parameter.

In some embodiments, the first configuring unit is further configured with two SRS resource sets, wherein in a case where the terminal equipment is configured to apply the first transmission configuration indication (TCI) state to transmit the physical uplink shared channel (PUSCH), the first transmission precoding matrix indicator (TPMI) and/or the first SRS resource indicator (SRI) is/are associated with the first SRS resource sets in the two SRS resource sets; and in a case where the terminal equipment is configured to apply the second transmission configuration indication (TCI) state to transmit the physical uplink shared channel (PUSCH), the first transmission precoding matrix indicator (TPMI) and/or the first SRS resource indicator (SRI) is/are associated with the second SRS resource sets in the two SRS resource sets.

In some embodiments, in the case where the first configuring unit 901 is configured to apply the first transmission configuration indication (TCI) state and the second transmission configuration indication (TCI) state to transmit the physical uplink shared channel (PUSCH), the transmitting unit 902 transmits the physical uplink shared channel (PUSCH) according to the first transmission precoding matrix indicator (TPMI) and the second transmission precoding matrix indicator (TPMI), and/or according to the first SRS resource indicator (SRI) and the second SRS resource indicator (SRI).

In some embodiments, in the case where the first configuring unit 901 is configured to apply the first transmission configuration indication (TCI) state and the second transmission configuration indication (TCI) state to transmit the physical uplink shared channel (PUSCH), the first transmission precoding matrix indicator (TPMI) is configured by the first parameter, and the second transmission precoding matrix indicator (TPMI) is configured by the third parameter; and/or, the first SRS resource indicator (SRI) is configured by the second parameter, and the second SRS resource indicator (SRI) is configured by the fourth parameter.

In some embodiments, in the case where the first configuring unit 901 is configured to apply the first transmission configuration indication (TCI) state and the second transmission configuration indication (TCI) state to transmit the physical uplink shared channel (PUSCH), the terminal equipment is configured with the first parameter and the third parameter, and/or the terminal equipment is configured with the second parameter and the fourth parameter.

In some embodiments, the first configuring unit is further configured with two SRS resource sets; wherein in the case where the first configuring unit is configured to apply the first transmission configuration indication (TCI) state and the second transmission configuration indication (TCI) state to transmit the physical uplink shared channel (PUSCH), the first transmission precoding matrix indicator (TPMI) and/or the first SRS resource indicator (SRI) is/are associated with the first two SRS resource set in the two SRS resource sets, and the second transmission precoding matrix indicator (TPMI) and/or the second SRS resource indicator (SRI) is/are associated with the second SRS resource set in the two SRS resource sets.

In some embodiments, the first configuring unit 901 is further configured with a multi-panel scheme (multipanelScheme), or, the first configuring unit is not configured with a multi-panel scheme (multipanelScheme); wherein the multi-panel scheme (multipanelScheme) indicates to use a spatial division multiplexing (SDM) scheme or a single frequency network (SFN) scheme.

In some embodiments, the first configuring unit 901 is configured with the multi-panel scheme (multipanelScheme) by second configuration information (PUSCH-Config), or the first configuring unit 901 is configured with the multi-panel scheme (multipanelScheme) by first configuration information (ConfiguredGrantConfig).

In some embodiments, the transmitting unit 902 further, in the case where the first configuring unit 901 is configured to apply the first transmission configuration indication (TCI) state or the second transmission configuration indication (TCI) state to transmit the physical uplink shared channel (PUSCH), when the first configuring unit 901 is provided with the multi-panel scheme (multipanelScheme), or when the first configuring unit 901 is not configured with the multi-panel scheme (multipanelScheme), transmits the physical uplink shared channel (PUSCH) according to a single transmission and reception point (sTRP) scheme; and/or, when the first configuring unit 901 is configured to apply the first transmission configuration indication (TCI) state and the second transmission configuration indication (TCI) state to transmit the physical uplink shared channel (PUSCH), when the first configuring unit 901 is configured with the multi-panel scheme (multipanelScheme) and the multi-panel scheme (multipanelScheme) indicates to use the spatial division multiplexing (SDM) scheme, transmits the physical uplink shared channel (PUSCH) according to the spatial division multiplexing (SDM) scheme; when the first configuring unit 901 is configured with the multi-panel scheme (multipanelScheme) and the multi-panel scheme (multipanelScheme) indicates to use the single frequency network (SFN) scheme, transmits the physical uplink shared channel (PUSCH) according to the single frequency network (SFN) scheme; and when the first configuring unit 901 is not configured with the multi-panel scheme (multipanelScheme), transmits the physical uplink shared channel (PUSCH) according to a time division multiplexing (TDM) scheme.

In some embodiments, in the case where the first configuring unit 901 is configured to apply the first transmission configuration indication (TCI) state or the second transmission configuration indication (TCI) state to transmit the physical uplink shared channel (PUSCH) and in the case where the first configuring unit 901 is configured with the multi-panel scheme (multipanelScheme) and the multi-panel scheme (multipanelScheme) indicates to use the spatial division multiplexing (SDM) scheme, an association between PT-RS port(s) and DM-RS port(s) includes that: a PT-RS port 0 is associated with a first scheduled DM-RS port, or, a PT-RS port 0 is associated with a first DM-RS port sharing PT-RS port 0, and a PT-RS port 1 is associated with a first DM-RS port sharing PT-RS port 1.

In some embodiments, the association between PT-RS port(s) and DM-RS port(s) further includes that: in a case where the terminal equipment is configured as one PT-RS port by a fifth parameter, PT-RS port 0 is associated with the first scheduled DM-RS port; and/or, in a case where the terminal equipment is configured as two PT-RS port(s) by the fifth parameter, PT-RS port 0 is associated with the first DM-RS port sharing PT-RS port 0, and PT-RS port 1 is associated with the first DM-RS port sharing PT-RS port 1.

In some embodiments, in the case where the first configuring unit 901 is configured to apply the first transmission configuration indication (TCI) state and the second transmission configuration indication (TCI) state to transmit the physical uplink shared channel (PUSCH) and in the case where the first configuring unit 901 is configured with the multi-panel scheme (multipanelScheme) and the multi-panel scheme (multipanelScheme) indicates to use the spatial division multiplexing (SDM) scheme, the association between PT-RS port(s) and DM-RS port(s) includes that: a PT-RS port 0 is associated with a first scheduled DM-RS port, or, a PT-RS port 0 is associated with a first scheduled DM-RS port corresponding to the first transmission precoding matrix indicator (TPMI) and/or the first SRS resource indicator (SRI), and a PT-RS port 1 is associated with a first scheduled DM-RS port corresponding to the second transmission precoding matrix indicator (TPMI) and/or the second SRS resource indicator (SRI).

In some embodiments, the association between PT-RS port(s) and DM-RS port(s) further includes that: in a case where the terminal equipment is configured as one PT-RS port by a sixth parameter, PT-RS port 0 is associated with the first scheduled DM-RS port; and/or, in a case where the terminal equipment is configured as two PT-RS port(s) by the sixth parameter, PT-RS port 0 is associated with the first scheduled DM-RS port corresponding to the first transmission precoding matrix indicator (TPMI) and/or the first SRS resource indicator (SRI), and PT-RS port 1 is associated with the first scheduled DM-RS port corresponding to the second transmission precoding matrix indicator (TPMI) and/or the second SRS resource indicator (SRI).

In some embodiments, in the case where the first configuring unit 901 is configured to apply the first transmission configuration indication (TCI) state or the second transmission configuration indication (TCI) state to transmit the physical uplink shared channel (PUSCH), the actually applied number of PT-RS port(s) is determined according to the first transmission precoding matrix indicator (TPMI) and/or the first SRS resource indicator (SRI).

In some embodiments, in a case where the physical uplink shared channel (PUSCH) is a non-codebook based physical uplink shared channel (PUSCH), the actually applied number of PT-RS port(s) is determined according to the first SRS resource indicator (SRI), and/or, in a case where the physical uplink shared channel (PUSCH) is a partial-coherent codebook based physical uplink shared channel (PUSCH), the actually applied number of PT-RS port(s) is determined according to the first transmission precoding matrix indicator (TPMI), and/or, in a case where the physical uplink shared channel (PUSCH) is a non-coherent codebook based physical uplink shared channel (PUSCH), the actually applied number of PT-RS port(s) is determined according to the first transmission precoding matrix indicator (TPMI).

In some embodiments, in the case where the first configuring unit 901 is configured to apply the first transmission configuration indication (TCI) state and the second transmission configuration indication (TCI) state to transmit the physical uplink shared channel (PUSCH), the first configuring unit 901 is configured with the multi-panel scheme (multipanelScheme), the multi-panel scheme (multipanelScheme) indicates to use the spatial division multiplexing (SDM) scheme and the first configuring unit 901 is configured as two PT-RS port(s) by the sixth parameter, the actually applied number of PT-RS port(s) is 2.

In some embodiments, the first configuring unit 901 is further configured with a first list (dl-OrJointTCI-StateList), and the terminal equipment has two indicated transmission configuration indication (TCI) states.

In some embodiments, in the case where the first configuring unit 901 is configured to apply the first transmission configuration indication (TCI) state or the second transmission configuration indication (TCI) state to transmit the PUSCH, the terminal equipment does not expect to be configured with the multi-panel scheme (multipanelScheme).

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the data transmission apparatus 900 may further include other components or modules, and reference may be made to related techniques for particulars of these components or modules.

Furthermore, for the sake of simplicity, connection relationships between the components or modules or signal profiles thereof are only illustrated in FIG. 9. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

It can be seen from the above embodiment that in the case where the terminal equipment is configured to apply the first TCI state or the second TCI state to transmit the PUSCH, the terminal equipment transmits the PUSCH according to the first TPMI and/or the first SRI. Thus, ambiguities in understanding transmission parameters actually applied to a configured grant type 1 PUSCH by the terminal equipment and the network device may be avoided, thereby avoiding failures in PUSCH transmission, and achieving reliable transmission of uplink data.

Embodiments of a fourth aspect

The embodiments of this disclosure provide a data reception apparatus. The apparatus may be, for example, a network device, or one or some components or assemblies configured in the network device. Contents in this embodiment identical to those in the embodiments of the second aspect shall not be described herein any further.

FIG. 10 is a schematic diagram of the data reception apparatus of the embodiments of this disclosure. As shown in FIG. 10, the data reception apparatus 1000 includes:

a second configuring unit 1001 configured to configure a terminal equipment to apply a first transmission configuration indication (TCI) state and/or a second transmission configuration indication (TCI) state; and
a receiving unit 1002 configured to receive a physical uplink shared channel (PUSCH) corresponding to a configured grant type 1 transmitted by the terminal equipment; wherein in a case where the terminal equipment is configured to apply the first transmission configuration indication (TCI) state or the second transmission configuration indication (TCI) state to transmit the physical uplink shared channel (PUSCH), the terminal equipment transmits the physical uplink shared channel (PUSCH) according to a first transmission precoding matrix indicator (TPMI) and/or a first SRS resource indicator (SRI).

Therefore, in the case where the terminal equipment is configured to apply the first TCI state or the second TCI state to transmit the PUSCH, the terminal equipment transmits the PUSCH according to the first TPMI and/or the first SRI. Thus, ambiguities in understanding transmission parameters actually applied to a configured grant type 1 PUSCH by the terminal equipment and the network device may be avoided, thereby avoiding failures in PUSCH transmission, and achieving reliable transmission of uplink data.

In some embodiments, in the case where the terminal equipment is configured to apply the first transmission configuration indication (TCI) state and the second transmission configuration indication (TCI) state to transmit the PUSCH, the receiving unit 1002 receives the PUSCH transmitted by the terminal equipment according to the first transmission precoding matrix indication information (TPMI) and the second transmission precoding matrix indication information (TPMI) and/or according to the first SRS resource indication information (SRI) and the second SRS resource indication information (SRI).

In some embodiments, the second configuring unit 1001 configures a multi-panel scheme (multipanelScheme) for the terminal equipment; or does not configure a multi-panel scheme (multipanelScheme) for the terminal equipment; wherein the multi-panel scheme (multipanelScheme) indicates to use a spatial division multiplexing (SDM) scheme or a single frequency network (SFN) scheme.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the data reception apparatus 1000 may further include other components or modules, and reference may be made to related techniques for particulars of these components or modules.

Furthermore, for the sake of simplicity, connection relationships between the components or modules or signal profiles thereof are only illustrated in FIG. 10. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

It can be seen from the above embodiment that in the case where the terminal equipment is configured to apply the first TCI state or the second TCI state to transmit the PUSCH, the terminal equipment transmits the PUSCH according to the first TPMI and/or the first SRI. Thus, ambiguities in understanding transmission parameters actually applied to a configured grant type 1 PUSCH by the terminal equipment and the network device may be avoided, thereby avoiding failures in PUSCH transmission, and achieving reliable transmission of uplink data.

Embodiments of a fifth aspect

The embodiments of this disclosure provide a communication system, and reference may be made to FIG. 1, with contents identical to those in the embodiments of the first to the fourth aspects being not going to be described herein any further.

In some embodiments, the communication system 100 may at least include:

a network device configured to configure to apply a first transmission configuration indication (TCI) state and/or a second transmission configuration indication (TCI) state; and

a terminal equipment configured to, in a case where it applies a first transmission configuration indication (TCI) state and/or a second transmission configuration indication (TCI) state to transmit a physical uplink shared channel (PUSCH), transmit the physical uplink shared channel (PUSCH) according to a first transmission precoding matrix indicator (TPMI) and/or a first SRS resource indicator (SRI).

Hence, in the case where the terminal equipment is configured to apply the first TCI state or the second TCI state to transmit the PUSCH, the terminal equipment transmits the PUSCH according to the first TPMI and/or the first SRI. Thus, ambiguities in understanding transmission parameters actually applied to a configured grant type 1 PUSCH by the terminal equipment and the network device may be avoided, thereby avoiding failures in PUSCH transmission, and achieving reliable transmission of uplink data.

The embodiments of this disclosure further provide a network device, which may be, for example, a base station. However, this disclosure is not limited thereto, and it may also be another network device.

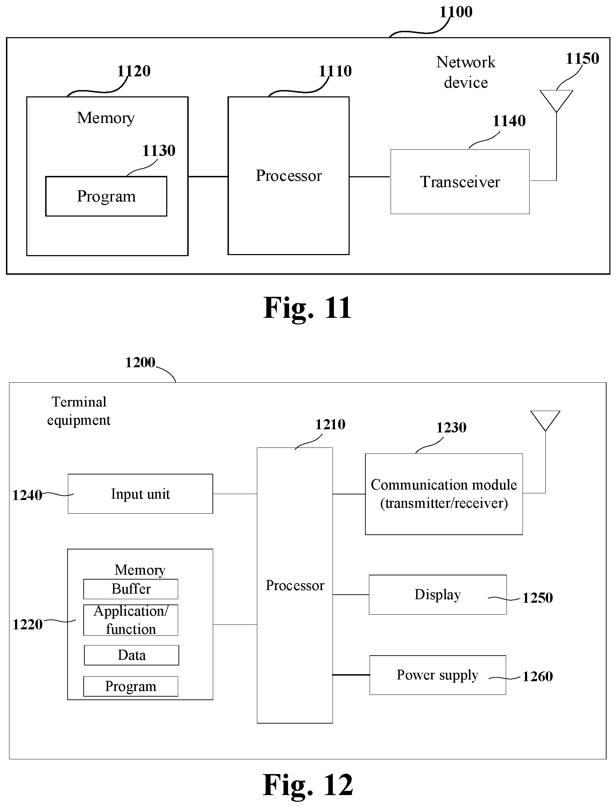

FIG. 11 is a schematic diagram of a structure of the network device of the embodiments of this disclosure. As shown in FIG. 11, the network device 1100 may include a processor 1110 (such as a central processing unit (CPU)) and a memory 1120, the memory 1120 being coupled to the processor 1110. Wherein, the memory 1120 may store various data, and furthermore, it may store a program 1130 for information processing, and execute the program 1130 under control of the processor 1110.

Furthermore, as shown in FIG. 11, the network device 1100 may include a transceiver 1140, and an antenna 1150, etc. Wherein, functions of the above components are similar to those in the related art, and shall not be described herein any further. It should be noted that the network device 1100 does not necessarily include all the parts shown in FIG.

11, and furthermore, the network device 1100 may include parts not shown in FIG. 11, and the related art may be referred to.

The embodiments of this disclosure further provide a terminal equipment; however, this disclosure is not limited thereto, and it may also be another equipment.

FIG. 12 is a schematic diagram of the terminal equipment of the embodiments of this disclosure. As shown in FIG. 12, the terminal equipment 1200 may include a processor 1210 and a memory 1220, the memory 1220 storing data and a program and being coupled to the processor 1210. It should be noted that this figure is illustrative only, and other types of structures may also be used, so as to supplement or replace this structure and achieve a telecommunications function or other functions.

For example, the processor 1210 may be configured to execute a program to carry out method as described in the embodiments of the first aspect. For example, the processor 1210 may be configured to execute the following control: being configured to apply a first transmission configuration indication (TCI) state and/or a second transmission configuration indication (TCI) state; and transmitting a physical uplink shared channel (PUSCH) corresponding to a configured grant type 1 by the terminal equipment according to the first transmission configuration indication (TCI) state and/or the second transmission configuration indication (TCI) state; wherein in a case of being configured to apply the first transmission configuration indication (TCI) state or the second transmission configuration indication (TCI) state to transmit the PUSCH, the PUSCH is transmitted according to a first transmission precoding matrix indicator (TPMI) and/or a first SRS resource indicator (SRI).

As shown in FIG. 12, the terminal equipment 1200 may further include a communication module 1230, an input unit 1240, a display 1250, and a power supply 1260; wherein functions of the above components are similar to those in the related art, which shall not be described herein any further. It should be noted that the terminal equipment 1200 does not necessarily include all the parts shown in FIG. 12, and the above components are not necessary. Furthermore, the terminal equipment 1200 may include parts not shown in FIG. 12, and the related art may be referred to.

The embodiments of this disclosure provide a computer program, which, when executed in a terminal equipment, will cause the terminal equipment to carry out the data transmission method as described in the embodiments of the first aspect.

The embodiments of this disclosure provide a storage medium, storing a computer program, which will cause a terminal equipment to carry out the data transmission method as described in the embodiments of the first aspect.

The embodiments of this disclosure provide a computer program, which, when executed in a network device, will cause the network device to carry out the data reception method as described in the embodiments of the second aspect.

The embodiments of this disclosure provide a storage medium, storing a computer program, which will cause a network device to carry out the data reception method as described in the embodiments of the second aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

As to implementations containing the above embodiments, following supplements are further disclosed.

1. A communication system, including:

a network device configured to configure to apply a first transmission configuration indication (TCI) state and/or a second transmission configuration indication (TCI) state; and
a terminal equipment configured to, in a case where it applies a first transmission configuration indication (TCI) state and/or a second transmission configuration indication (TCI) state to transmit a physical uplink shared channel (PUSCH), transmit the physical uplink shared channel (PUSCH) according to a first transmission precoding matrix indicator (TPMI) and/or a first SRS resource indicator (SRI).

2. The system according to supplement 1, wherein in the case where the terminal equipment is configured to apply the first transmission configuration indication (TCI) state or the second transmission configuration indication (TCI) state to transmit the PUSCH, the terminal equipment does not expect to be configured with a multi-panel scheme (multipanelScheme).

**Claims**

1. A data transmission apparatus, configured in a terminal equipment, wherein the data transmission apparatus comprises:

a first configuring unit configured to apply a first transmission configuration indication (TCI) state and/or a second transmission configuration indication (TCI) state; and
a transmitting unit configured to transmit a physical uplink shared channel (PUSCH) corresponding to a configured grant type 1 according to the first transmission configuration indication (TCI) state and/or the second transmission configuration indication (TCI) state;
wherein in a case where the first configuring unit is configured to apply the first transmission configuration indication (TCI) state or the second transmission configuration indication (TCI) state to transmit the physical uplink shared channel (PUSCH), the transmitting unit transmits the physical uplink shared channel (PUSCH) according to a first transmission precoding matrix indicator (TPMI) and/or a first SRS resource indicator (SRI).

2. The apparatus according to claim 1, wherein in the case where the first configuring unit is configured to apply the first transmission configuration indication (TCI) state or the second transmission configuration indication (TCI) state to transmit the physical uplink shared channel (PUSCH),
the first transmission precoding matrix indicator (TPMI) is configured by a first parameter, and/or the first SRS resource indicator (SRI) is configured by a second parameter.

3. The apparatus according to claim 2, wherein in the case where the first configuring unit is configured to apply the first transmission configuration indication (TCI) state or the second transmission configuration indication (TCI) state to transmit the physical uplink shared channel (PUSCH),

the terminal equipment is configured with the first parameter and/or the second parameter, or,
the terminal equipment is configured with the first parameter and a third parameter, and/or, the terminal equipment is configured with the second parameter and a fourth parameter.

4. The apparatus according to claim 1, wherein the first configuring unit is further configured with two SRS resource sets;

in a case where the terminal equipment is configured to apply the first transmission configuration indication (TCI) state to transmit the physical uplink shared channel (PUSCH),
the first transmission precoding matrix indicator (TPMI) and/or the first SRS resource indicator (SRI) is/are associated with a first SRS resource set in the two SRS resource sets;
and in a case where the terminal equipment is configured to apply the second transmission configuration indication (TCI) state to transmit the physical uplink shared channel (PUSCH),

the first transmission precoding matrix indicator (TPMI) and/or the first SRS resource indicator (SRI) is/are associated with a second SRS resource set in the two SRS resource sets.

5. The apparatus according to claim 1, wherein in the case where the first configuring unit is configured to apply the first transmission configuration indication (TCI) state and the second transmission configuration indication (TCI) state to transmit the physical uplink shared channel (PUSCH),
the transmitting unit transmits the physical uplink shared channel (PUSCH) according to a first transmission precoding matrix indicator (TPMI) and a second transmission precoding matrix indicator (TPMI), and/or according to a first SRS resource indicator (SRI) and a second SRS resource indicator (SRI).

6. The apparatus according to claim 5, wherein in the case where the first configuring unit is configured to apply the first transmission configuration indication (TCI) state and the second transmission configuration indication (TCI) state to transmit the physical uplink shared channel (PUSCH),

the first transmission precoding matrix indicator (TPMI) is configured by a first parameter, and the second transmission precoding matrix indicator (TPMI) is configured by a third parameter; and/or,
the first SRS resource indicator (SRI) is configured by a second parameter, and the first SRS resource indicator (SRI) is configured by a fourth parameter.

7. The apparatus according to claim 6, wherein in the case where the first configuring unit is configured to apply the first transmission configuration indication (TCI) state and the second transmission configuration indication (TCI) state to transmit the physical uplink shared channel (PUSCH),
the terminal equipment is configured with the first parameter and the third parameter, and/or the terminal equipment is configured with the second parameter and the fourth parameter.

8. The apparatus according to claim 5, wherein the first configuring unit is further configured with two SRS resource sets;

wherein in the case where the first configuring unit is configured to apply the first transmission configuration indication (TCI) state and the second transmission configuration indication (TCI) state to transmit the physical uplink shared channel (PUSCH),
the first transmission precoding matrix indicator (TPMI) and/or the first SRS resource indicator (SRI) is/are associated with a first SRS resource set in the two SRS resource sets, and the second transmission precoding matrix indicator (TPMI) and/or the second SRS resource indicator (SRI) is/are associated with a second SRS resource set in the two SRS resource sets.

9. The apparatus according to claim 1 or 5, wherein the first configuring unit is further configured with a multi-panel scheme (multipanelScheme), or, the first configuring unit is not configured with a multi-panel scheme;
wherein the multi-panel scheme indicates to use a spatial division multiplexing (SDM) scheme or a single frequency network (SFN) scheme.

10. The apparatus according to 9, wherein the first configuring unit is configured with the multi-panel scheme (multipanelScheme) by second configuration information (PUSCH-Config), or the first configuring unit is configured with the multi-panel scheme (multipanelScheme) by first configuration information (ConfiguredGrantConfig).

11. The apparatus according to 9, wherein the transmitting unit further,

in the case where the first configuring unit is configured to apply the first transmission configuration indication (TCI) state or the second transmission configuration indication (TCI) state to transmit the physical uplink shared channel (PUSCH),
when the first configuring unit is provided with the multi-panel scheme (multipanelScheme), or when the first configuring unit is not configured with the multi-panel scheme (multipanelScheme), transmits the physical uplink shared channel (PUSCH) according to a single transmission and reception point (sTRP) scheme; and/or,
in the case where the first configuring unit is configured to apply the first transmission configuration indication (TCI) state and the second transmission configuration indication (TCI) state to transmit the physical uplink shared channel (PUSCH),
when the first configuring unit is configured with the multi-panel scheme (multipanelScheme) and the multi-panel scheme (multipanelScheme) indicates to use the spatial division multiplexing (SDM) scheme, transmits the physical uplink shared channel (PUSCH) according to the spatial division multiplexing (SDM) scheme;

when the first configuring unit is configured with the multi-panel scheme (multipanelScheme) and the multi-panel scheme (multipanelScheme) indicates to use the single frequency network (SFN) scheme, transmits the physical uplink shared channel (PUSCH) according to the single frequency network (SFN) scheme;

when the first configuring unit is not configured with the multi-panel scheme (multipanelScheme), transmits the physical uplink shared channel (PUSCH) according to a time division multiplexing (TDM) scheme.

12. The apparatus according to claim 9, wherein in the case where the first configuring unit is configured to apply the first transmission configuration indication (TCI) state or the second transmission configuration indication (TCI) state to transmit the physical uplink shared channel (PUSCH) and in the case where the first configuring unit is configured with the multi-panel scheme (multipanelScheme) and the multi-panel scheme (multipanelScheme) indicates to use the spatial division multiplexing (SDM) scheme, an association between PT-RS port(s) and DM-RS port(s) comprises that:

a PT-RS port 0 is associated with a first scheduled DM-RS port, or,

a PT-RS port 0 is associated with a first DM-RS port sharing PT-RS port 0, and a PT-RS port 1 is associated with a first DM-RS port sharing PT-RS port 1.

13. The apparatus according to 12, wherein the association between PT-RS port(s) and DM-RS port(s) further comprises that:

in a case where the terminal equipment is configured as one PT-RS port by a fifth parameter, a PT-RS port 0 is associated with a first scheduled DM-RS port; and/or,

in a case where the terminal equipment is configured as two PT-RS port(s) by a fifth parameter, a PT-RS port 0 is associated with a first DM-RS port sharing PT-RS port 0, and a PT-RS port 1 is associated with a first DM-RS port sharing PT-RS port 1.

14. The apparatus according to claim 9, wherein in the case where the first configuring unit is configured to apply the first transmission configuration indication (TCI) state and the second transmission configuration indication (TCI) state to transmit the physical uplink shared channel (PUSCH) and in the case where the first configuring unit is configured with the multi-panel scheme (multipanelScheme) and the multi-panel scheme (multipanelScheme) indicates to use the spatial division multiplexing (SDM) scheme, an association between PT-RS port(s) and DM-RS port(s) comprises that:

a PT-RS port 0 is associated with a first scheduled DM-RS port, or,

a PT-RS port 0 is associated with a first scheduled DM-RS port corresponding to the first transmission precoding matrix indicator (TPMI) and/or the first SRS resource indicator (SRI), and a PT-RS port 1 is associated with a first scheduled DM-RS port corresponding to the second transmission precoding matrix indicator (TPMI) and/or the second SRS resource indicator (SRI).

15. The apparatus according to 14, wherein the association between PT-RS port(s) and DM-RS port(s) further comprises that:

in a case where the terminal equipment is configured as one PT-RS port by a sixth parameter, a PT-RS port 0 is associated with a first scheduled DM-RS port; and/or,

in a case where the terminal equipment is configured as two PT-RS port(s) by a sixth parameter, a PT-RS port 0 is associated with a first scheduled DM-RS port corresponding to the first transmission precoding matrix indicator (TPMI) and/or the first SRS resource indicator (SRI), and a PT-RS port 1 is associated with a first scheduled DM-RS port corresponding to a second transmission precoding matrix indicator (TPMI) and/or a second SRS resource indicator (SRI).

16. The apparatus according to claim 1, wherein in the case where the first configuring unit is configured to apply the first transmission configuration indication (TCI) state or the second transmission configuration indication (TCI) state to transmit the physical uplink shared channel (PUSCH), a actually applied number of PT-RS port(s) is determined according to the first transmission precoding matrix indicator (TPMI) and/or the first SRS resource indicator (SRI).

17. The apparatus according to claim 16, wherein in a case where the physical uplink shared channel (PUSCH) is a non-codebook based physical uplink shared channel (PUSCH), the actually applied number of PT-RS port(s) is determined according to the first SRS resource indicator (SRI), and/or, in a case where the physical uplink shared channel (PUSCH) is a partial-coherent codebook based physical uplink shared channel (PUSCH), the actually applied number of PT-RS port(s) is determined according to the first transmission precoding matrix indicator (TPMI), and/or, in a case where the physical uplink shared channel (PUSCH) is a non-coherent codebook based physical uplink shared channel (PUSCH), the actually applied number of PT-RS port(s) is determined according to the first transmission precoding matrix indicator (TPMI).

**18.** The apparatus according to claim 9, wherein in the case where the first configuring unit is configured to apply the first transmission configuration indication (TCI) state and the second transmission configuration indication (TCI) state to transmit the physical uplink shared channel (PUSCH), the first configuring unit is configured with the multi-panel scheme (multipanelScheme), the multi-panel scheme (multipanelScheme) indicates to use the spatial division multiplexing (SDM) scheme and the first configuring unit is configured as two PT-RS port(s) by a sixth parameter, a actually applied number of PT-RS port(s) is 2.

**19.** The apparatus according to 1, wherein the first configuring unit is further configured with a first list (dl-OrJointTCI-StateList), and the terminal equipment has two indicated transmission configuration indication (TCI) states.

**20.** A data reception apparatus, configured in a network device, wherein the data reception apparatus comprises:

a second configuring unit configured to configure a terminal equipment to apply a first transmission configuration indication (TCI) state and/or a second transmission configuration indication (TCI) state; and
a receiving unit configured to receive a physical uplink shared channel (PUSCH) corresponding to a configured grant type 1 transmitted by the terminal equipment; wherein in a case where the terminal equipment is configured to apply the first transmission configuration indication (TCI) state or the second transmission configuration indication (TCI) state to transmit the physical uplink shared channel (PUSCH), the terminal equipment transmits the physical uplink shared channel (PUSCH) according to a first transmission precoding matrix indicator (TPMI) and/or a first SRS resource indicator (SRI).

**Fig. 1**

**Fig. 2**

PUSCH 1    | 1<sup>st</sup> part of UL-SCH 1 |    2<sup>nd</sup> part of UL-SCH 1    PUSCH 1

**Fig. 3**

PUSCH 1    | UL-SCH 1 |    UL-SCH 1    PUSCH 1

**Fig. 4**

**Fig. 5**

**Fig. 6**

701

The terminal equipment being configured to apply a first transmission configuration indication (TCI) state and/or a second transmission configuration indication (TCI) state

702

The terminal equipment transmits a physical uplink shared channel (PUSCH) corresponding to a configured grant type 1 according to the first transmission configuration indication (TCI) state and/or the second transmission configuration indication (TCI) state; wherein in a case of being configured to apply the first transmission configuration indication (TCI) state or the second transmission configuration indication (TCI) state to transmit the PUSCH, the PUSCH is transmitted according to a first transmission precoding matrix indicator (TPMI) and/or a first SRS resource indicator (SRI)

## Fig. 7

801

The network device configuring configures a terminal equipment by the network device to apply a first transmission configuration indication (TCI) state and/or a second transmission configuration indication (TCI) state

802

The network device receives a physical uplink shared channel (PUSCH) corresponding to a configured grant type 1 transmitted by the terminal equipment; wherein in a case where the terminal equipment is configured to apply the first transmission configuration indication (TCI) state or the second transmission configuration indication (TCI) state to transmit the physical uplink shared channel (PUSCH), the terminal equipment transmits the physical uplink shared channel (PUSCH) according to a first transmission precoding matrix indicator (TPMI) and/or a first SRS resource indicator (SRI)

## Fig. 8

901

**Data transmission apparatus**

901

First configuring
unit

902

Transmitting unit

**Fig. 9**

1000

**Data reception apparatus**

1001

Second configuring
unit

1002

Receiving unit

**Fig. 10**

1100

Network
device                    1150

1120                    1110                              1140

Memory                  Processor              Transceiver

1130

Program

## Fig. 11

1200

Terminal
equipment

1210                    1230

Communication module
(transmitter/receiver)

1240    Input unit

Processor

Memory
Buffer
1220    Application/
function
Data              Display          1250

Program

Power supply      1260

## Fig. 12

## INTERNATIONAL SEARCH REPORT

International application No.

**PCT/CN2023/121249**

### A. CLASSIFICATION OF SUBJECT MATTER

H04W 72/232(2023.01)i

According to International Patent Classification (IPC) or to both national classification and IPC

### B. FIELDS SEARCHED

Minimum documentation searched (classification system followed by classification symbols)

IPC:H04W,H04L,H04Q/-

Documentation searched other than minimum documentation to the extent that such documents are included in the fields searched

Electronic data base consulted during the international search (name of data base and, where practicable, search terms used)

CNTXT, WPABS, ENTXT, CNKI, 3GPP: 物理上行共享信道, PUSCH, 传输配置指示, TCI, 状态, 配置, 授权, 类型1, 传输预编码矩阵, TPMI, SRS, SRI, 资源, 指示, 信息, 第一, 第二, 两个, 两种, 端口, 面板, 参数, Physical Uplink Shared Channel, Transmission Configuration Indication, status, configuration, grant, Type 1, Transmission Precoding Matrix, resource, indication, information, first, second, two, port, panel, parameter

### C. DOCUMENTS CONSIDERED TO BE RELEVANT

| Category* | Citation of document, with indication, where appropriate, of the relevant passages | Relevant to claim No. |
|---|---|---|
| X | CN 116349196 A (BEIJING XIAOMI MOBILE SOFTWARE CO., LTD.) 27 June 2023 (2023-06-27)<br>description, paragraphs [0047]-[0383], and figures 1-10 | 1-20 |
| A | CN 114337953 A (VIVO MOBILE COMMUNICATION CO., LTD.) 12 April 2022 (2022-04-12)<br>entire document | 1-20 |
| A | CN 114765879 A (VIVO MOBILE COMMUNICATION CO., LTD.) 19 July 2022 (2022-07-19)<br>entire document | 1-20 |
| A | US 2023216626 A1 (TELEFONAKTIEBOLAGET LM ERICSSON (PUBL)) 06 July 2023 (2023-07-06)<br>entire document | 1-20 |
| A | WO 2022250404 A1 (LG ELECTRONICS INC.) 01 December 2022 (2022-12-01)<br>entire document | 1-20 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 February 2024** | **05 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

| International application No. |
|---|
| **PCT/CN2023/121249** |

| Patent document cited in search report | | | Publication date (day/month/year) | Patent family member(s) | | | Publication date (day/month/year) |
|---|---|---|---|---|---|---|---|
| CN | 116349196 | A | 27 June 2023 | None | | | |
| CN | 114337953 | A | 12 April 2022 | None | | | |
| CN | 114765879 | A | 19 July 2022 | None | | | |
| US | 2023216626 | A1 | 06 July 2023 | EP | 4128604 | A1 | 08 February 2023 |
| | | | | WO | 2021198988 | A1 | 07 October 2021 |
| WO | 2022250404 | A1 | 01 December 2022 | None | | | |

Form PCT/ISA/210 (patent family annex) (July 2022)